(19) Europäisches Patentamt
European Patent Office
Office européen des brevets

(11) EP 0 748 823 A1

(12) EUROPEAN PATENT APPLICATION

(43) Date of publication:
18.12.1996 Bulletin 1996/51

(51) Int Cl.6: **C08F 10/00**, C08F 4/651

(21) Application number: **96850103.1**

(22) Date of filing: **29.05.1996**

(84) Designated Contracting States:
**DE FR GB**

(30) Priority: **31.05.1995 JP 157098/95**
**31.05.1995 JP 157099/95**
**21.09.1995 JP 267849/95**
**21.09.1995 JP 267850/95**

(71) Applicant: **NIPPON OIL CO. LTD.**
**Minato-ku Tokyo (JP)**

(72) Inventors:
- **Seki, Takashi, c/o Japan Polyolefins Co., Ltd.**
**Kawasaki-shi, Kanagawa-ken (JP)**
- **Sano, Akira, c/o Japan Polyolefins Co., Ltd.**
**Kawasaki-shi, Kanagawa-ken (JP)**
- **Matsuura, Kazuo, c/o Japan Polyolefins Co., Ltd.**
**Kawasaki-shi, Kanagawa-ken (JP)**
- **Tajima, Yoshio, c/o Nippon Oil Co., Ltd.**
**Yokohama-shi, Kanagawa-ken (JP)**

(74) Representative: **Modin, Jan et al**
**c/o Axel Ehrners Patentbyra AB**
**Box 10316**
**100 55 Stockholm (SE)**

# (54) Catalyst composition and process for the production of olefinic polymers

(57) A catalyst composition essentially comprises a compound (A) of the formula

$$Me^1R^1_p(OR^2)_qX^1_{4-p-q} \qquad I$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \le p \le 4$, $0 \le q \le 4$ and $0 \le p+q \le 4$;

a compound (B) of the formula

$$Me^2R^3_m(OR^4)_nX^2_{z-m-n} \qquad II$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \le m \le z$, $0 \le n \le z$ and $0 < m+n \le z$;

a cyclic compound (C) having two or more conjugated double-bonds; and

a compound (D) of the formula

$$R^5R^6C = CR^7R^8 \qquad III$$

and/or

$$R^9C \equiv CR^{10} \qquad IV$$

wherein $R^5$ through $R^{10}$ each are hydrogen or a $C_1$ - $C_{24}$ hydrocarbon group.

The catalyst composition further incorporates a modified organoaluminum compound (E) having Al-O-Al bonds derived from the reaction of an organoaluminum compound with water, said organoaluminum compound being of the formula

$$R^{17}_cAlX^7_{3-c}$$

wherein $R^{17}$ is a hydrocarbon group such as an alkyl, alkenyl, aryl and aralkyl group of 1 to 18 carbon atoms, $X^7$ is a halogen or hydrogen atom, and c is an integer of $1 \le c \le 3$;

and still further incorporates an inorganic and/or particulate polymer carrier (F), said inorganic carrier being formed from a porous inorganic compound of the group consisting of a carbonaceous material, metal, metal oxide, metal chloride, metal carbonate and mixtures thereof, and having a maximum length of 5 - 200 μm, a surface area of 50 - 1,000 $m^2/g$ and a pore volume of 0.05 - 3 $cm^3/g$, and said particulate polymer carrier being formed from a thermoplastic or thermosetting resin having an average particle size of 5 - 2,000 μm. The disclosed catalysts find extensive use in the manufacture of olefinic polymers having a relatively wide molecular

EP 0 748 823 A1

weight distribution as well as olefinic copolymers having a relatively narrow composition distribution, with a minimal use of aluminoxane.

## Description

This invention relates to polymerization catalysts and the production of olefinic polymers using the same.

Catalyst compositions comprising zirconium compounds, typically metallocene and aluminoxane, are known for use in the homopolymerization of olefins such as ethylene or the copolymerization of ethylene/alpha-olefins as disclosed for example in Japanese Laid-Open Patent Publication No. 58-19309. While the disclosed prior art catalyst contributes to the production of ethylenic copolymers at a reasonable rate of yield, and such copolymers would have relatively narrow molecular weight and narrow composition distributions. In order to provide increased polymer yields using such prior art catalysts, it would be necessary to use large quantities of aluminoxane used as a promoter to transition metals such as zirconium. However, aluminoxane, particularly methylaluminoxane, is very costly.

Some advanced catalysts have been proposed as disclosed in Japanese Laid-Open Patent Publication No, 63-218707; however, there appears to be no marked improvement in regard to aluminoxane usage. The disclosed catalysts are often soluble in the polymerization reaction system and when used in slurry or gas-phase polymerization, tend to give a polymer product having reduced bulk density and hence degraded granular properties.

It has also been proposed to use hafnium compounds amongst various transition metal compounds to provide polymers with higher molecular weight. However, such hafnium compounds are rather complicated to synthesize and inferior in catalytic activity to zirconium compounds.

A growing demand in the relevant industry has been focused on the availability of such catalyst components which are capable of high catalytic activity and conducive to the formation of high molecular weight polymers as well as copolymers such as ethylene-α-olefin copolymers having relatively narrow composition distribution with the use of expensive aluminoxane held to a minimum.

With the foregoing difficulties of the prior art in view, the present invention seeks to provide a catalyst composition useful for the production of polymers which is capable of providing high yields of olefinic polymers with increased molecular weight and relatively wide molecular weight distribution as well as olefinic copolymers having a relatively narrow composition distribution, with a minimal usage of aluminoxane.

According to a first aspect of the invention, there is provided a catalyst composition which comprises:

a compound (A) of the formula

$$Me^1R^1_p(OR^2)_qX^1_{4-p-q} \qquad \text{I}$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \le p \le 4$, $0 \le q \le 4$ and $0 \le p+q \le 4$;

a compound (B) of the formula

$$Me^2R^3_m(OR^4)_nX^2_{z-m-n} \qquad \text{II}$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \le m \le z$, $0 \le n \le z$ and $0 < m+n \le z$;

a cyclic compound (C) having two or more conjugated double-bonds; and

a compound (D) of the formula

$$R^5R^6C = CR^7R^8 \qquad \text{III}$$

and/or

$$R^9C \equiv CR^{10} \qquad \text{IV}$$

wherein $R^5$ through $R^{10}$ each are hydrogen or a $C_1$ - $C_{24}$ hydrocarbon group.

According to a second aspect of the invention, there is provided a catalyst composition which comprises:

a compound (A) of the formula

$$Me^1R^1_p(OR^2)_qX^1_{4-p-q} \qquad I$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \le p \le 4$, $0 \le q \le 4$ and $0 \le p+q \le 4$;
a compound (B) of the formula

$$Me^2R^3_m(OR^4)_nX^2_{z-m-n} \qquad II$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \le m \le z$, $0 \le n \le z$ and $0 < m+n \le z$;
a cyclic compound (C) having two or more conjugated double-bonds;
a compound (D) of the formula

$$R^5R^6C = CR^7R^8 \qquad III$$

and/or

$$R^9C \equiv CR^{10} \qquad IV$$

wherein $R^5$ through $R^{10}$ each are hydrogen or a $C_1$ - $C_{24}$ hydrocarbon group; and
a modified organoaluminum compound (E) having Al-O-Al bonds derived from the reaction of an organoaluminum compound with water, said organoaluminum compound being of the formula

$$R^{17}_cAlX^7_{3-c}$$

wherein $R^{17}$ is a hydrocarbon group such as an alkyl, alkenyl, aryl and aralkyl group of 1 to 18 carbon atoms, $X^7$ is a halogen or hydrogen atom, and c is an integer of $1 \le c \le 3$.

According to a third aspect of the invention, there is provided a catalyst composition which comprises:

a compound (A) of the formula

$$Me^1R^1_p(OR^2)_qX^1_{4-p-q} \qquad I$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \le p \le 4$, $0 \le q \le 4$ and $0 \le p+q \le 4$;
a compound (B) of the formula

$$Me^2R^3_m(OR^4)_nX^2_{z-m-n} \qquad II$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \le m \le z$, $0 \le n \le z$ and $0 < m+n \le z$;
a cyclic compound (C) having two or more conjugated double-bonds;
a compound (D) of the formula

$$R^5R^6C = CR^7R^8 \qquad III$$

and/or

$$R^9C \equiv CR^{10} \qquad IV$$

wherein $R^5$ through $R^{10}$ each are hydrogen or a $C_1$ - $C_{24}$ hydrocarbon group;
a modified organoaluminum compound (E) having Al-O-Al bonds derived from the reaction of an organoaluminum compound with water, said organoaluminum compound being of the formula

$$R^{17}{}_cAlX^7{}_{3-c}$$

wherein $R^{17}$ is a hydrocarbon group such as an alkyl, alkenyl, aryl and aralkyl group of 1 to 18 carbon atoms, $X^7$ is a halogen or hydrogen atom, and c is an integer of $1 \le c \le 3$; and
an inorganic and/or particulate polymer carrier (F), said inorganic carrier being formed from a porous inorganic compound of the group consisting of a carbonaceous material, metal, metal oxide, metal chloride, metal carbonate and mixtures thereof, and having a maximum length of 5 - 200 µm, a surface area of 50 - 1,000 $m^2$/g and a pore volume of 0.05 - 3 $cm^3$/g, and said particulate polymer carrier being formed from a thermoplastic or thermosetting resin having an average particle size of 5 - 2,000 µm.

According to a fourth aspect of the invention, there is provided a process for the production of olefinic homopolymers or copolymers in the presence of the above catalyst supported on an inorganic and/or particulate polymer carrier (F), the resulting polymers having a highly satisfactory granular quality.

The catalyst composition of the invention as recited in the appended claims comprises the following components.

1. Compound (A) of the formula

$$Me^1R^1{}_p(OR^2)_qX^1{}_{4-p-q} \qquad I$$

$R^1$ and $R^2$ each are a $C_1$ - $C_{24}$, a $C_1$ - $C_{12}$, more preferably a $C_1$ - $C_8$, straight or branched hydrocarbon group.

Such hydrocarbon groups include an alkyl group such as methyl, ethyl, propyl, isopropyl, cyclopropyl, butyl, isobutyl, tert-butyl, cyclobutyl, pentyl, isopentyl, neopentyl, cyclopentyl, hexyl, isohexyl, cyclohexyl, heptyl, octyl or the like, an alkenyl group such as vinyl, allyl or the like, an aryl group such as phenyl, tolyl, xylyl, mesityl, indenyl, naphthyl or the like, and an aralkyl group such as benzyl, trityl, phenethyl, styryl, benzhydryl, phenylbutyl, phenylpropyl, neophyl and the like.

$X^1$ is a halogen atom such as fluorine, iodine, chlorine and bromine. $Me^1$ denotes zirconium (Zr), titanium (Ti) and hafnium (Hf). Zirconium is preferred for the purpose of the invention. p and q are $0 \le p \le 4$ and $0 \le q \le 4$, respectively and $0 \le p+q \le 4$, preferably $0 < p+q \le 4$.

The compound (A) exemplarily and specifically includes tetramethyl zirconium, tetraethyl zirconium, tetrapropyl zirconium, tetra-n-butyl zirconium, tetrapentyl zirconium, tetraphenyl zirconium, tetratolyl zirconium, tetrabenzyl zirconium, tetraallyl zirconium, tetraneophyl zirconium, tetramethoxy zirconium, tetraethoxy zirconium, tetrapropoxy zirconium, tetrabutoxy zirconium, tetrapentyloxy zirconium, tetraphenoxy zirconium, tetratolyloxy zirconium, tetrabenzyloxy zirconium, tetraallyloxy zirconium, tetraneophyloxy zirconium, tetrachloro zirconium, trimethylmonochlorozirconium, triethylmonochlorozirconium, tripropylmonochlorozirconium, tri-n-butylmonochlorozirconium, tripentylmonochlorozirconium, triphenylmonochlorozirconium, tritolylmonochlorozirconium, tribenzylmonochlorozirconium, triallylmonochlorozirconium, trineophylmonochlorozirconium, dimethyldichlorozirconium, diethyldichlorozirconium, dipropyldichlorozirconium, di-n-butyldichlorozirconium, dipentyldichlorozirconium, diphenyldichlorozirconium, ditolyldichlorozirconium, dibenzyldichlorozirconium, diallyldichlorozirconium, dineophyldichlorozirconium, monomethyltrichlorozirconium, monoethyltrichlorozirconium, monopropyltrichlorozirconium, mono-n-butyltrichlorozirconium, monopentyltrichlorozirconium, monophenyltrichlorozirconium, monotolyltrichlorozirconium, monobenzyltrichlorozirconium, monoallyltrichlorozirconium, mononeophyltrichlorozirconium, trimethoxymonochlorozirconium, dimethoxydichlorozirconium, monomethoxytrichlorozirconium, triethoxymonochlorozirconium, diethoxydichlorozirconium, monoethoxytrichlorozirconium, tripropoxymonochlorozirocnium, dipropoxydichlorozirconium, monopropoxytrichlorozirconium, tri-n-butoxymonochlorozirconium, di-n-butoxydichlorozirconium, mono-n-butoxytrichlorozirconium, tripentyloxymonochlorozirconium, dipentyloxydichlorozirconium, monopentyloxytrichlorozirconium, 5 triphenoxymonochlorozirconium, diphenoxydichlorozirconium, monophenoxytrichlorozirconium, tritolyloxymonochlorozirconium, ditolyloxydichlorozirconium, monotolyloxytrichlorozirconium, tribenzyloxymonochlorozirconium, dibenzyloxydichlorozirconium, monobenzyloxytrichlorozirconium, triallyloxymonochlorozirconium, diallyloxydichlorozirconium, monoallyloxytrichlorozirconium, trineophyloxymonochlorozirconium, dineophyloxydichlorozirconium, mononeophyloxytrichlorozirconium, tetrabromozirconium, trimethylmonobromozirconium, triethylmonobromozirconium, tripropylmonobromozirconium, tri-n-butylmonobromozirconium, tripentylmonobromozirconium, triphenylmonobromozirconium, tritolylmonobromozirconium 25 tribenzylmonobromozirconium, triallylmonobromozirconium trineophylmonobromozirconium, dimethyldibromozirconium, diethyldibromozirconium, dipropyldibromozirconium, di-n-butyldibromozirconium, dipentyldibromozirconium, diphenyldibromozirconium, ditolyldibromozirconium, dibenzyldibromozirconium, diallyldibromozirconium, dineophyldibromozirconium, monomethyltribromozirconium, monoethyltribromozirconium, monopropyltribromozirconium, mono-n-butyltribromozirconium, monopentyltribromozirconium, monophenyltribromozirconium, monotolyltribromozirconium, monobenzyltribromozirconium, monoallyltribromozirconium, mononeophyltribromozirconium, trimethoxymonobromozirconium, dimethoxydibromozirconium, monomethoxytribromozirconium, triethoxymonobromozirconium, diethoxydibromozirconium, monoethoxytribromozirconium, tripropoxymonobromozirconium, dipropoxydibromozirconium, monopropoxytribromozirconium, tri-n-butoxymonobromozirconium, di-n-butoxydibromozirconium, mono-n-butoxytribromozirconium, tripentyloxymonobromozirconium, dipentyloxydibromozirconium, monopentyloxytribromozirconium, triphenoxymonobromozirconium, diphenoxydibromozirconium, monophenoxytribromozirconium, tritolyloxymonobromozirconium, ditolyloxydibromozirconium, monotolyloxytribromozirconium, tribenzyloxymonobromozirconium, dibenzyloxydibromozirconium, monobenzyloxytribromozirconium, triallyloxymonobromozirconium, diallyloxydibromozirconium, monoallyloxytribromozirconium, trineophyloxymonobromozirconium, dineophyloxydibromozirconium, mononeophyloxytribromozirconium, tetraiodozirconium, trimethylmonoiodozirconium, triethylmonoiodozirconium, tripropylmonoiodozirconium, tri-n-butylmonoiodozirconium, tripentylmonoiodozirconium, triphenylmonoiodozirconium, tritolylmonoiodozirconium, tribenzylmonoiodozirconium, triallylmonoiodozirconium, trineophylmonoiodozirconium, dimethyldiiodozirconium, diethyldiiodozirconium, dipropyldiiodozirconium, di-n-butyldiiodozirconium, dipentyldiiodozirconium, diphenyldiiodozirconium, ditolyldiiodozirconium, dibenzyldiiodozirconium, diallyldiiodozirconium, dineophyldiiodozirconium, monomethyltriiodozirconium, monoethyltriiodozirconium, monopropyltriiodozirconium, mono-n-butyltriiodozirconium, monopentyltriiodozirconium, monophenyltriiodozirconium, monotolyltriiodozirconium, monobenzyltriiodozirconium, monoallyltriiodozirconium, mononeophyltriiodozirconium, trimethoxymonoiodozirconium, dimethoxydiiodozirconium, monomethoxytriiodozirconium, triethyoxymonoiodozirconium, diethoxydiiodozirconium, monoethoxytriiodozirconium, tripropoxymonoiodozirconium, dipropoxydiiodozirconium, monopropoxytriiodozirconium, tri-n-butoxymonoiodozirconium, di-n-butoxydiiodozirconium, mono-n-butoxytriiodozirconium, tripentyloxymonoiodozirconium, dipentyloxydiiodozirconium, monopentyloxytriiodozirconium, triphenoxymonoiodozirconium, diphenoxydiiodozirconium, monophenoxytriiodozirconium, tritolyloxymonoiodozirconium, ditolyloxydiiodozirconium, monotolyloxytriiodozirconium, tribenzyloxymonoiodozirconium, dibenzyloxydiiodozirconium, monobenzyloxytriiodozirconium, triallyloxymonoiodozirconium, diallyloxydiiodozirconium, monoallyloxytriiodozirconium, trineophyloxymonoiodozirconium, dineophyloxydiiodozirconium, mononeophyloxytriiodozirconium, tribenzylmonomethoxyzirconium, tribenzylmonoethoxyzirconium, tribenzylmonopropoxyzirconium, tribenzylmonobutoxyzirconium, tribenzylmonopetyloxyzirconium, tribenzylmonophenoxyzirconium, tribenzylmonotolyloxyzirconium, tribenzylmonobenzyloxyzirconium, tribenzylmonoallyloxyzirconium, tribenzylmononeophyloxyzirconium, dibenzyldimethoxyzirconium, dibenzyldiethoxyzirconium, dibenzyldipropoxyzirconium, dibenzyldibutoxyzirconium, dibenzyldipetyloxyzirconium, dibenzyldiphenoxyzirconium, dibenzyltolyloxyzirconium, dibenzyldibenzyloxyzirconium, dibenzyldiallyloxyzirconium, dibenzyldineophyloxyzirconium, monobenzyltrimethoxyzirconium, monobenzyltriethoxyzirconium, monobenzyltripropoxyzirconium, monobenzyltributoxyzirconium, monobenzyltripetyloxyzirconium, monobenzyltriphenoxyzirconium, monobenzyltritolyloxyzirconium, monobenzyltribenzyloxyzirconium, monobenzyltriallyloxyzirconium, monobenzyltrineophyloxyzirconium, trineophylmonomethoxyzirconium, trineophylmonoethoxyzirconium, trineophylmonopropoxyzirconium, trineophylmonobutoxyzirconium, dineophyldimethoxyzirconium, dineophyldiethoxyzirconium, dineophyldipropoxyzirconium, dineophyldibutoxyzirconium, dineophyldiphenoxyzirconium, mononeophyltrimethoxyzirconium, mononeophyltriethoxyzirconium, mononeophyltripropoxyzirconium, mononeophyltributoxyzirconium, mononeophyltriphenoxyzirconium, zirconiumtetrahydride, zirconiummonohydridetrimethoxide, zirconiummonohydridetriethoxide, zirconiummonohydridetripropoxide, zirconiummonohydridetributoxide, zirconiumdihydridedimethoxide, zirconiumdihydridediethoxide, zirconiumdihydridedipropoxide, zirconiumdihydridedibutoxide, zirconiumtrihydridemonomethoxide, zirconiumtrihydridemonoethoxide, zirconiumtrihydridemonopropoxide, zirconiumtrihydridemonobutoxide, zirconiummonohydridetrichloride, zirconiummonohydridetribromide, zirconiummonohydridetriiodide, zirconiummonohydridetrifluoride, zirconiumdihydridedichloride, zirconiumdihydridedibromide, zirconiumdihydridediiodide, zirconiumdihydridedifluoride, zirconiumtrihydridemonochloride, zirconiumtrihydridemonobromide, zirconiumtrihydridemonoiodide, zirconiumtrihydridemonofluoride, zirconiummonohydridetrimethyl, zirconiummonohydridetribenzyl, zirconiummonohydridetriphenyl, zirconiumdihydridedimethyl, zirconiumdihydridedibenzyl, zirconiumdihydridediphenyl, zirconiumtrihydridemonomethyl, zirconiumtrihydridemonobenzyl, zirconiumtrihydridemonophenyl, zirconiummonohydridedimethoxidemonochloride, zirconiummonohydridediethoxidemonochloride, zirconiummonohydridedipropoxidemonochloride, zirconiummonohydridedibutoxidemonochloride, zirconiumdihydridemonomethoxidemonochloride, zirconiumdihydridemonoethoxidemonochloride, zirconiumdihydridemonopropoxidemonochloride, zirconiumdihydridemonobutoxidemonochloride, zirconiummonohydridedimethoxidemonomethyl, zirconiummonohydridediethoxidemonomethyl, zirconiummonohydridedipropoxidemonomethyl, zirconiumdihydridemonoethoxidemonomethyl, zirconiumdihydridemonoethoxidemonomethyl, zirconiumdihydridemonopropoxidemonomethyl, zirconiummonohydridemonomethoxidemonochloridemonobenzyl, zirconiummonohydridemonomethoxidemonochloridemonophenyl, zirconiummonohydridemonomethoxidemonochloridemonomethyl, tetramethyl titanium, tetraethyl titanium, tetrapropyl titanium, tetra-n-butyl titanium, tetrapentyl titanium, tetraphenyl titanium, tetratolyl titanium, tetrabenzyl titanium, tetraallyl titanium, tetraneophyl titanium, tetramethoxy titanium, tetraethoxy titanium, tetrapropoxy titanium, tetrabutoxy titanium, tetrapentyloxy titanium, tetraphenoxy titanium, tetratolyloxy titanium, tetrabenzyloxy titanium, tetraallyloxy titanium, tetraneophyloxy titanium, tetrachloro titanium, trimethylmonochlorotitanium, triethylmonochlorotitanium, tripropylmonochlorotitanium, tri-n-butylmonochlorotitanium, tripentylmonochlorotitanium, triphenylmonochlorotitanium, tritolylmonochlorotitanium, tribenzylmonochlorotitanium, triallylmonochlorotitanium, trineophylmonochlorotitanium, dimethyldichlorotitanium, diethyldichlorotitanium, dipropyldichlorotitanium, di-n-butyldichlorotitanium, dipentyldichlorotitanium, diphenyldichlorotitanium, ditolyldichlorotitanium, dibenzyldichlorotitanium, diallyldichlorotitanium, dineophyldichlorotitanium, monomethyltrichlorotitanium, monoethyltrichlorotitanium, monopropyltrichlorotitanium, mono-n-butyltrichlorotitanium, monopentyltrichlorotitanium, monophenyltrichlorotitanium, monotolyltrichlorotitanium, monobenzyltrichlorotitanium, monoallyltrichlorotitanium, mononeophyltrichlorotitanium, trimethoxymonochlorotitanium, dimethoxydichlorotitanium, monomethoxytrichlorotitanium, triethoxymonochlorotitanium, diethoxydichlorotitanium, monoethoxytrichlorotitanium, tripropoxymonochlorotitanium, dipropoxydichlorotitanium, monopropoxytrichlorotitanium, tri-n-butoxymonochlorotitanium, di-n-butoxydichlorotitanium, mono-n-butoxytrichlorotitanium, tripentyloxymonochlorotitanium, dipentyloxydichlorotitanium, monopentyloxytrichlorotitanium, triphenoxymonochlorotitanium, diphenoxydichlorotitanium, monophenoxytrichlorotitanium, tritolyloxymonochlorotitanium, ditolyloxydichlorotitanium, monotolyloxytrichlorotitanium, tribenzyloxymonochlorotitanium, dibenzyloxydichlorotitanium, monobenzyloxytrichlorotitanium, triallyloxymonochlorotitanium, diallyloxydichlorotitanium, monoallyloxytrichlorotitanium, trineophyloxymonochlorotitanium, dineophyloxydichlorotitanium, mononeophyloxytrichlorotitanium, tetrabromotitanium, trimethylmonobromotitanium, triethylmonobromotitanium, tripropylmonobromotitanium, tri-n-butylmonobromotitanium, tripentylmonobromotitanium, triphenylmonobromotitanium, tritolylmonobromotitanium, tribenzylmonobromotitanium, triallylmonobromotitanium, trineophylmonobromotitanium, dimethyldibromotitanium, diethyldibromotitanium, dipropyldibromotitanium, di-n-butyldibromotitanium, dipentyldibromotitanium, diphenyldibromotitanium, ditolyldibromotitanium, dibenzyldibromotitanium, diallyldibromotitanium, dineophyldibromotitanium, monomethyltribromotitanium, monoethyltribromotitanium, monopropyltribromotitanium, mono-n-butyltribromotitanium, monopentyltribromotitanium, monophenyltribromotitanium, monotolyltribromotitanium, monobenzyltribromotitanium, monoallyltribromotitanium, mononeophyltribromotitanium, trimethoxymonobromotitanium, dimethoxydibromotitanium, monomethoxytribromotitanium, triethoxymonobromotitanium, diethoxydibromotitanium, monoethoxytribromotitanium, tripropoxymonobromotitanium, dipropoxydibromotitanium, monopropoxytribromotitanium, tri-n-butoxymonobromotitanium, di-n-butoxydibromotitanium, mono-n-butoxytribromotitanium, tripentyloxymonobromotitanium, dipentyloxydibromotitanium, monopentyloxytribromotitanium, triphenoxymonobromotitanium, diphenoxydibromotitanium, monophenoxytribromotitanium, tritolyloxymonobromotitanium, ditolyloxydibromotitanium, monotolyloxytribromotitanium, tribenzyloxymonobromotitanium, dibenzyloxydibromotitanium, monobenzyloxytribromotitanium, triallyloxymonobromotitanium, diallyloxydibromotitanium, monoallyloxytribromotitanium, trineophyloxymonobromotitanium, dineophyloxydibromotitanium, mononeophyloxytribromotitanium, tetraiodotitanium, trimethylmonoiodotitanium, triethylmonoiodotitanium, tripropylmonoiodotitanium, tri-n-butylmonoiodotitanium, tripentylmonoiodotitanium, triphenylmonoiodotitanium, tritolylmonoiodotitanium, tribenzylmonoiodotitanium, triallylmonoiodotitanium, trineophylmonoiodotitanium, dimethyldiiodotitanium, diethyldiiodotitanium, dipropyldiiodotitanium, di-n-butyldiiodotitanium, dipentyldiiodotitanium, diphenyldiiodotitanium, ditolyldiiodotitanium, dibenzyldiiodotitanium, diallyldiiodotitanium, dineophyldiiodotitanium, monomethyltriiodotitanium, monoethyltriiodotitanium, monopropyltriiodotitanium, mono-n-butyltriiodotitanium, monopentyltriiodotitanium, monophenyltriiodotitanium, monotolyltriiodotitanium, monobenzyltriiodotitanium, monoallyltriiodotitanium, mononeophyltriiodotitanium, trimethoxymonoiodotitanium, dimethoxydiiodotitanium, monomethoxytriiodotitanium, triethyoxymonoiodotitanium, diethoxydiiodotitanium, monoethoxytriiodotitanium, tripropoxymonoiodotitanium, dipropoxydiiodotitanium, monopropoxytriiodotitanium, tri-n-butoxymonoiodotitanium, di-n-butoxydiiodotitanium, mono-n-butoxytriiodotitanium, tripentyloxymonoiodotitanium, dipentyloxydiiodotitanium, monopentyloxytriiodotitanium, triphenoxymonoiodotitanium, diphenoxydiiodotitanium, monophenoxytriiodotitanium, tritolyloxymonoiodotitanium, ditolyloxydiiodotitanium, monotolyloxytriiodotitanium, tribenzyloxymonoiodotitanium, dibenzyloxydiiodotitanium, monobenzyloxytriiodotitanium, triallyloxymonoiodotitanium, diallyloxydiiodotitanium, monoallyloxytriiodotitanium, trineophyloxymonoiodotitanium, dineophyloxydiiodotitanium, mononeophyloxytriiodotitanium, tribenzylmonomethoxytitanium, tribenzylmonoethoxytitanium, tribenzylmonopropoxytitanium, tribenzylmonobutoxytitanium, tribenzylmonopetyloxytitanium, tribenzylmonophenoxytitanium, tribenzylmonotolyoxytitanium, tribenzylmonobenzyloxytitanium, tribenzylmonoallyloxytitanium, tribenzylmononeophyloxytitanium, dibenzyldimethoxytitanium, dibenzyldiethoxytitanium, dibenzyldipropoxytitanium, dibenzyldibutoxytitanium, dibenzyldipetyloxytitanium, dibenzyldiphenoxytitanium, dibenzylditolyloxytitanium, dibenzyldibenzyloxytitanium, dibenzyldiallyloxytitanium, dibenzyldineophyloxytitanium, monobenzyltrimethoxytitanium, monobenzyltriethoxytitanium, monobenzyltripropoxytitanium, monobenzyltributoxytitanium, monobenzyltripetyloxytitanium, monobenzyltriphenoxytitanium, monobenzyltritolyloxytitanium, monobenzyltribenzyloxytitanium, monobenzyltriallyloxytitanium, monobenzyltrineophyloxytitanium, trineophylmonomethoxytitanium, trineophylmonoethoxytitanium, trineophylmonopropoxytitanium, trineophylmonobutoxytitanium, dineophyldimethoxytitanium, dineophyldiethoxytitanium, dineophyldipropoxytitanium, dineophyldibutoxytitanium, dineophyldiphenoxytitanium, mononeophyltrimethoxytitanium, mononeophyltriethoxytitanium, mononeophyltripropoxytitanium, mononeophyltributoxytitanium, mononeophyltriphenoxytitanium, tetramethyl hafnium, tetraethyl hafnium, tetrapropyl hafnium, tetra-n-butyl hafnium, tetrapentyl hafnium, tetraphenyl hafnium, tetratolyl hafnium, tetrabenzyl hafnium, tetraallyl hafnium, tetraneophyl hafnium, tetramethoxy hafnium, tetraethoxy hafnium, tetrapropoxy hafnium, tetrabutoxy hafnium, tetrapentyloxy hafnium, tetraphenoxy hafnium, tetratolyloxy hafnium, tetrabenzyloxy hafnium, tetraallyloxy hafnium, tetraneophyloxy hafnium, tetrachloro hafnium, trimethylmonochlorohafnium, triethylmonochlorohafnium, tripropylmonochlorohafnium, tri-n-butylmonochlorohafnium, tripentylmonochlorohafnium, triphenylmonochlorohafnium, tritolylmonochlorohafnium, tribenzylmonochlorohafnium, triallylmonochlorohafnium, trineophylmonochlorohafnium, dimethyldichlorohafnium, diethyldichlorohafnium, dipropyldichlorohafnium, di-n-butyldichlorohafnium, dipentyldichlorohafnium, diphenyldichlorohafnium, ditolyldichlorohafnium, dibenzyldichlorohafnium, diallyldichlorohafnium, dineophyldichlorohafnium, monomethyltrichlorohafnium, monoethyltrichlorohafnium, monopropyltrichlorohafnium, mono-n-butyltrichlorohafnium, monopentyltrichlorohafnium, monophenyltrichlorohafnium, monotolyltrichlorohafnium, monobenzyltrichlorohafnium, monoallyltrichlorohafnium, mononeophyltrichlorohafnium, trimethoxymonochlorohafnium, dimethoxydichlorohafnium, monomethoxytrichlorohafnium, triethoxymonochlorohafnium, diethoxydichlorohafnium, monoethoxytrichlorohafnium, tripropoxymonochlorohafnium, dipropoxydichlorohafnium, monopropoxytrichlorohafnium, tri-n-butoxymonochlorohafnium, di-n-butoxydichlorohafnium, mono-n-butoxytrichlorohafnium, tripentyloxymonochlorohafnium, dipentyloxydichlorohafnium, monopentyloxytrichlorohafnium, triphenoxymonochlorohafnium, diphenoxydichlorohafnium, monophenoxytrichlorohafnium, tritolyloxymonochlorohafnium, ditolyloxydichlorohafnium, monotolyloxytrichlorohafnium, tribenzyloxymonochlorohafnium, dibenzyloxydichlorohafnium, monobenzyloxytrichlorohafnium, triallyloxymonochlorohafnium, diallyloxydichlorohafnium, monoallyloxytrichlorohafnium, trineophyloxymonochlorohafnium, dineophyloxydichlorohafnium, mononeophyloxytrichlorohafnium, tetrabromohafnium, trimethylmonobromohafnium, triethylmonobromohafnium, tripropylmonobromohafnium, tri-n-butylmonobromohafnium, tripentylmonobromohafnium, triphenylmonobromohafnium, tritolylmonobromohafnium, tribenzylmonobromohafnium, triallylmonobromohafnium, trineophylmonobromohafnium, dimethyldibromohafnium, diethyldibromohafnium, dipropyldibromohafnium, di-n-butyldibromohafnium, dipentyldibromohafnium, diphenyldibromohafnium, ditolyldibromohafnium, dibenzyldibromohafnium, diallyldibromohafnium, dineophyldibromohafnium, monomethyltribromohafnium, monoethyltribromohafnium, monopropyltribromohafnium, mono-n-butyltribromohafnium, monopentyltribromohafnium, monophenyltribromohafnium, monotolyltribromohafnium, monobenzyltribromohafnium, monoallyltribromohafnium, mononeophyltribromohafnium, trimethoxymonobromohafnium, dimethoxydibromohafnium, monomethoxytribromohafnium, triethoxymonobromohafnium, diethoxydibromohafnium, monoethoxytribromohafnium, tripropoxymonobromohafnium, dipropoxydibromohafnium, monopropoxytribromohafnium, tri-n-butoxymonobromohafnium, di-n-butoxydibromohafnium, mono-n-butoxytribromohafnium, tripentyloxymonobromohafnium, dipentyloxydibromohafnium, monopentyloxytribromohafnium, triphenoxymonobromohafnium, diphenoxydibromohafnium, monophenoxytribromohafnium, tritolyloxymonobromohafnium, ditolyloxydibromohafnium, monotolyloxytribromohafnium, tribenzyloxymonobromohafnium, dibenzyloxydibromohafnium, monobenzyloxytribromohafnium, triallyloxymonobromohafnium, diallyloxydibromohafnium, monoallyloxytribromohafnium, trineophyloxymonobromohafnium, dineophyloxydibromohafnium, mononeophyloxytribromohafnium, tetraiodohafnium, trimethylmonoiodohafnium, triethylmonoiodohafnium, tripropylmonoiodohafnium, tri-n-butylmonoiodohafnium, tripentylmonoiodohafnium, triphenylmonoiodohafnium, tritolylmonoiodohafnium, tribenzylmonoiodohafnium, triallylmonoiodohafnium, trineophylmonoiodohafnium, dimethyldiiodohafnium, diethyldiiodohafnium, dipropyldiiodohafnium, di-n-butyldiiodohafnium, dipentyldiiodohafnium, diphenyldiiodohafnium, ditolyldiiodohafnium, dibenzyldiiodohafnium, diallyldiiodohafnium, dineophyldiiodohafnium, monomethyltriiodohafnium, monoethyltriiodohafnium, monopropyltriiodohafnium, mono-n-butyltriiodohafnium, monopentyltriiodohafnium, monophenyltriiodohafnium, monotolyltriiodohafnium, monobenzyltriiodohafnium, monoallyltriiodohafnium, mononeophyltriiodohafnium, trimethoxymonoiodohafnium, dimethoxydiiodohafnium, monomethoxytriiodohafnium, triethyoxymonoiodohafnium, diethoxydiiodohafnium, monoethoxytriiodohafnium, tripropoxymonoiodohafnium, dipropoxydiiodohafnium, monopropoxytriiodohafnium, tri-n-butoxymonoiodohafnium, di-n-butoxydiiodohafnium, mono-n-butoxytriiodohafnium, tripentyloxymonoiodohafnium, dipentyloxydiiodohafnium, monopentyloxytriiodohafnium, triphenoxymonoiodohafnium, diphenoxydiiodohafnium, monophenoxytriiodohafnium, tritolyloxymonoiodohafnium, ditolyloxydiiodohafnium, monotolyloxytriiodohafnium, tribenzyloxymonoiodohafnium, dibenzyloxydiiodohafnium, monobenzyloxytriiodohafnium, triallyloxymonoiodohafnium, diallyloxydiiodohafnium, monoallyloxytriiodohafnium, trineophyloxymonoiodohafnium, dineophyloxydiiodohafnium, mononeophyloxytriiodohafnium, tribenzylmonomethoxyhafnium, tribenzylmonoethoxyhafnium, tribenzylmonopropoxyhafnium, tribenzylmonobutoxyhafnium, tribenzylmonopetyloxyhafnium, tribenzylmonophenoxyhafnium, tribenzylmonotolyoxyhafnium, tribenzylmonobenzyloxyhafnium, tribenzylmonoallyloxyhafnium, tribenzylmononeophyloxyhafnium, dibenzyldimethoxyhafnium, dibenzyldiethoxyhafnium, dibenzyldipropoxyhafnium, dibenzyldibutoxyhafnium, dibenzyldipetyloxyhafnium, dibenzyldiphenoxyhafnium, dibenzylditolyloxyhafnium, dibenzyldibenzyloxyhafnium, dibenzyldiallyloxyhafnium, dibenzyldineophyloxyhafnium, monobenzyltrimethoxyhafnium, monobenzyltriethoxyhafnium, monobenzyltripropoxyhafnium, monobenzyltributoxyhafnium, monobenzyltripetyloxyhafnium, monobenzyltriphenoxyhafnium, monobenzyltritolyloxyhafnium, monobenzyltribenzyloxyhafnium, monobenzyltriallyloxyhafnium, monobenzyltrineophyloxyhafnium, trineophylmonomethoxyhafnium, trineophylmonoethoxyhafnium, trineophylmonopropoxyhafnium, trineophylmonobutoxyhafnium, dineophyldimethoxyhafnium, dineophyldiethoxyhafnium, dineophyldipropoxyhafnium, dineophyldibutoxyhafnium, dineophyldiphenoxyhafnium, mononeophyltrimethoxyhafnium, mononeophyltriethoxyhafnium, mononeophyltripropoxyhafnium, mononeophyltributoxyhafnium, mononeophyltriphenoxyhafnium and the other.

Two or more the above compounds may be used in combination if desirable. Preferred are tetramethyl zirconium, tetraethyl zirconium, tetrabenzyl zirconium, tetrapropoxy zirconium, tripropoxymonochloro zirconium, tetrabutoxy zirconium, tetrabutoxy titanium, tetrabutoxy hafnium and tetrachloro zirconium among which particularly preferred are the compounds represented by $Zr(OR^2)_4$ in which $OR^2$ designates an alkoxy group such as tetrapropoxy zirconium and tetrabutoxy zirconium.

2. Compound (B) of the formula

$$Me^2R^3_m(OR^4)_nX^2_{z-m-n} \qquad II$$

$Me^2$ is an element of Groups I - III, preferably Groups II - III, of the Periodic Table which specifically include lithium, sodium, potassium, magnesium, calcium, zinc, boron and aluminum.

$R^3$ and $R^4$ each are a $C_1$ - $C_{24}$, preferably a $C_1$-$C_{12}$, more preferably a $C_1$ - $C_8$ straight or branched chain hydrocarbon group including alkyl group such as methyl, ethyl, propyl, isopropyl, cyclopropyl, butyl, isobutyl, tert-butyl, cyclobutyl, pentyl, isopentyl, neopentyl, cyclopentyl, hexyl, isohexyl, cyclohexyl, heptyl and octyl; each alkenyl group such as vinyl and allyl; each aryl group such as phenyl, tolyl, xylyl, mesityl, indenyl and naphthyl; and each aralkyl group such as benzyl, trityl, phenethyl, styryl, benzhydryl, phenylbutyl, phenylpropyl and neophyl.

$X^2$ is a hydrogen atom or a halogen atom such as fluorine, iodine, chlorine and bromine. In the case where $X^2$ is a hydrogen atom, $Me^2$ is boron, aluminum or other elements of Group III of the Periodic Table.

The symbol z is a valence of $Me^2$, and m and n are $0 \leq m \leq z$, $0 \leq n \leq z$ and $0 < m+n \leq z$.

The compound (B) of the above definition according to the invention encompasses a range of compounds including methyllithium, ethyllithium, n-propyllithium, isopropyllithium, n-butyllithium, t-butyllithium, pentyllithium, octyllithium, phenyllithium, benzyllithium, dimethylmagnesium, diethylmagnesium, di-n-propylmagnesium, diisopropylmagnesium, di-n-butylmagnesium, di-t-butylmagnesium, dipentylmagnesium, dioctylmagnesium, diphenylmagnesium, dibenzylmagnesium, methylmagnesiumchloride, ethylmagnesiumchloride, n-propylmagnesiumchloride, isopropylmagnesiumchloride, n-butylmagnesiumchloride, t-butylmagnesiumchloride, pentylmagnesiumchloride, octylmagnesiumchloride, phenylmagnesiumchloride, benzylmagnesiumchloride, methylmagnesiumbromide, methylmagnesiumiodide, ethylmagnesiumbromide, ethylmagnesiumiodide, n-propylmagnesiumbromide, n-propylmagnesiumiodide, isopropylmagnesiumbromide, isopropylmagnesiumiodide, n-butylmagnesiumbromide, n-butylmagnesiumiodide, t-butylmagnesiumbromide, t-butylmagnesiumiodide, pentylmagnesiumbromide, pentylmagnesiumiodide, octylmagnesiumbromide, octylmagnesiumiodide, phenylmagnesiumbromide, phenylmagnesiumiodide, benzylmagnesiumbromide, benzylmagnesiumiodide, dimethylzinc, diethylzinc, di-n-propylzinc, diisopropylzinc, di-n-butylzinc, di-t-butylzinc, dipentylzinc, dioctylzinc, diphenylzinc, dibenzylzinc, trimethylboron, triethylboron, tri-n-propylboron, triisopropylboron, tri-n-butylboron, tri-t-butylboron, tripentylboron, trioctylboron, triphenylboron, tribenzylboron, trimethylaluminum, triethylaluminum, diethylaluminumhydride, diethylaluminumchloride, diethylaluminumbromide, diethylaluminumfluoride, diethylaluminumiodide, ethylaluminumdichloride, ethylaluminumdibromide, ethylaluminumdifluoride, ethylaluminumdiiodide, tripropylaluminum, dipropylaluminumhydride, dipropylaluminumchloride, dipropylaluminumbromide, dipropylaluminumfluoride, dipropylaluminumiodide, diisobutylaluminumhydride, propylaluminumdichloride, propylaluminumdibromide, propylaluminumdifluoride, propylaluminumdiiodide, triisopropylaluminum, diisopropylaluminumchloride, diisopropylaluminumbromide, diisopropylaluminumfluoride, diisopropylaluminumiodide, ethylaluminumsesquichloride, ethylaluminumsesquibromide, propylaluminumsesquichloride, propylaluminumsesquibromide, n-butylaluminumsesquichloride, n-butylaluminumsesquibromide, isopropylaluminumdichloride, isopropylaluminumdibromide, isopropylaluminumdifluoride, isopropylaluminumdiiodide, tributylaluminum, dibutylaluminumchloride, dibutylaluminumbromide, dibutylaluminumfluoride, dibutylaluminumiodide, butylaluminumdichloride, butylaluminumdibromide, butylaluminumdifluoride, butylaluminumdiiodide, tri-sec-butylaluminum, di-sec-butylaluminumchloride, di-sec-butylaluminumbromide, di-sec-butylaluminumfluoride, di-sec-butylaluminumiodide, sec-butylaluminumdichloride, sec-butylaluminumdibromide, sec-butylaluminumdifluoride, sec-butylaluminumdiiodide, tri-tert-butylaluminum, di-tert-butylaluminumchloride, di-tert-butylaluminumbromide, di-tert-butylaluminumfluoride, di-tert-butylaluminumiodide, tert-butylaluminumdichloride, tert-butylaluminumdibromide, tert-butylaluminumdifluoride, tert-butylaluminumdiiodide, triisobutylaluminum diisobutylaluminumchloride, diisobutylaluminumbromide, diisobutylaluminumfluoride, diisobutylaluminumiodide, isobutylaluminumdichloride, isobutylaluminumdibromide, isobutylaluminumdifluoride, isobutylaluminumdiiodide, trihexylaluminum, dihexylaluminumchloride, dihexylaluminumbromide, dihexylaluminumfluoride, dihexylaluminumiodide, hexylaluminumdichloride, hexylaluminumdibromide, hexylaluminumdifluoride, hexylaluminumdiiodide, tripentylaluminum, dipentylaluminumchloride, dipentylaluminumbromide, dipentylaluminumfluoride, dipentylaluminumiodide, pentylaluminumdichloride, pentylaluminumdibromide, pentylaluminumdifluoride, pentylaluminumdiiodide, trihexylaluminum, methylaluminumdimethoxide, methylaluminumdiethoxide, methylaluminumdipropoxide, methylaluminumdibutoxide, dimethylaluminummethoxide, dimethylaluminumethoxide, dimethylaluminumpropoxide, dimethylaluminumbutoxide, ethylaluminumdimethoxide, ethylaluminumdiethoxide, ethylaluminumdipropoxide, ethylaluminumdibutoxide, diethylaluminummethoxide, diethylaluminumethoxide, diethylaluminumpropoxide, diethylaluminumbutoxide, propylaluminumdimethoxide, propylaluminumdiethoxide, propylaluminumdipropoxide, propylaluminumdibutoxide, dipropylaluminummethoxide, dipropylaluminumethoxide, dipopylaluminumpropoxide, dipropylaluminumbutoxide, butylaluminumdimethoxide, butylaluminumdiethoxide, butylaluminumdipropoxide, butylaluminumdibutoxide, dibutylaluminummethoxide, dibutylaluminumethoxide, dibutylaluminumpropoxide, dibutylaluminumbutoxide, dimethylaluminumhydride, diethylaluminumhydride, dipropylaluminumhydride, diisopropylaluminumhydride, dibutylaluminumhydride, diisobutylaluminumhydride, dihexylaluminumhydride, dicyclohexylaluminumhydride, methylaluminumdihydride, ethylaluminumdihydride, propylaluminumdihydride, isopropylaluminumdihydride, butylaluminumdihydride, isobutylaluminumdihydride, hexylaluminumdihydride, cyclohexylaluminumdihydride, dimethylboronhydride, diethylboronhydride, methylborondihydride and ethylborondihydride.

Two or more of these compounds may be blended in any desirable combination. Preferred compounds (B) are specifically trimethylaluminum, triethylaluminum, diethylaluminumchloride, tripropylaluminum, triisopropylaluminum, tributylaluminum, tri-sec-butylaluminum, tri-tert-butylaluminum, triisobutylaluminum, trihexylaluminum, tripentylaluminum, diisobutylaluminumhydride, tridecylaluminum and the like.

3. Cyclic Compound (C) having two or more conjugated double-bonds, as exemplarily identified below.

3-1) Cyclic hydrocarbon compound having one or more carbon rings having more than two, preferably two to four, more preferably two to three conjugated double-bonds and a total carbon number of 4 - 24, preferably 4 - 12

3-2) Cyclic hydrocarbon compound similar to the aforesaid hydrocarbon compound which is partially substituted by one to six hydrocarbon groups, typically $C_1$ - $C_{12}$ alkyl or aralkyl groups

3-3) Organosilicone compound having more than two, preferably two to four, more preferably two to three conjugated double-bonds and a total carbon number of 4 - 24, preferably 4 - 12

3-4) Organosilicone compound similar to said organosilicone compound which is partially substituted by one to six hydrocarbon groups

3-5) Alkali metal salts (sodium and lithium salts) of each of the aforesaid compounds.

Particularly preferred are such cyclic hydrocarbon compounds as are represented by the formula

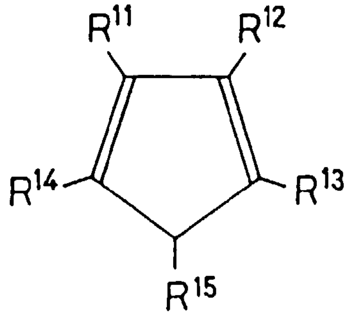

...... V

where $R^{11}$ through $R^{15}$ each are hydrogen or a $C_1$ - $C_{10}$ hydrocarbon group, any two of these hydrocarbon groups jointly forming a conjugated double-bond-containing ring. The $C_1$ - $C_{10}$ hydrocarbon groups each include an alkyl group such as methyl, ethyl, propyl, isopropyl, butyl, tert-butyl, hexyl and octyl; an aryl group such as phenyl; an alkoxy group such as methoxy, ethoxy and propoxy; an aryloxy group such as phenoxy; an aralkyl group such as benzyl.

Also included are cycloheptatriene and aryl as well as their condensation rings formed jointly by any of the two hydrocarbon groups of formula (I).

Preferred among the above cyclic hydrocarbon compounds are cyclopentadiene, indene and azulene as well as derivatives thereof having substituted $C_1$ - $C_{10}$ alkyl, aryl, aralkyl, alcoxy or arlyloxy groups. The formula (I) cyclic hydrocarbon compounds further encompass such compounds bonded or crosslinked through alkylene groups of usually 2 - 8, preferably 2 - 3 carbon atoms.

The organosilicone compounds having cyclic hydrocarbon groups may be represented by the formula

$$(Cp)_rSiR^{16}_sX^3_{4-r-s} \qquad VI$$

where Cp is a cyclic hydrocarbon group such as cyclopentadienyl, substituted-cyclopentadienyl, indenyl and substituted-indenyl; $R^{16}$ is hydrogen or a $C_1$-$C_{24}$, preferably $C_1$-$C_{12}$ hydrocarbon group including an alkyl group such as methyl, ethyl, propyl, isopropyl, butyl, tert-butyl, pentyl, hexyl and octyl, an alkenyl group such as vinyl and allyl, an alkoxy group such as methoxy, ethoxy, propoxy and butoxy, an aryl group such as phenyl, tolyl and xylyl, an aryloxy group such as phenoxy, and an aralkyl group such as benzyl, phenetyl, styryl and neophyl; $R^{16}$ further including n-, iso-, s-, t- and neo-isomeric groups; $X^3$ is a halogen atom such as fluorine, iodine, chlorine and bromine; r and s are $0 < r \leq 4$, $0 \leq s \leq 3$, preferably $1 \leq r+s \leq 4$.

Eligible organocyclic hydrocarbon compounds for use as the Compound (C) according to the invention include cyclopentadiene, substituted-cyclopentadiene such as methylcyclopentadiene, ethylcyclopentadiene, propylcyclopentadiene, isopropylcyclopentadiene, butylcyclopentadiene, isobutylcyclopentadiene, t-butylcyclopentadiene, pentylcyclopentadiene, isopentylcyclopentadiene, hexylcyclopentadiene, octylcyclopentadiene, 1,2-dimethylcyclopentadiene, 1,3-dimethylcyclopentadiene, 1,2,4-trimethylcyclopentadiene, 1,2,3,4-tetramethylcyclopentadiene and pentamethylcyclopentadiene; indene and substituted-indene, such as 4-methylindene, 4,7-dimethylindene and 4,5,6,7-tetrahydroindene; cycloheptatriene, substituted-cycloheptatriene such as methylcycloheptatriene; cyclooctatetraene and substituted-cyclooctatetraene such as methylcyclooctatetraene; azulene, methylazulene and ethylazulene; and fluorene and substituted-fluorene such as methylfluorene; and further include monocyclopentadienylsilane, dicyclopentadienylsilane, triscyclopentadienylsilane, tetracyclopentadienylsilane, monocyclopentadienylmonomethylsilane, monocyclopentadienylmonoethylsilane, monocyclopentadienyldimethylsilane, monocyclopentadienyldiethylsilane, monocyclopentadienyltrimethylsilane, monocyclopentadienyltriethylsilane, monocyclopentadienylmonomethoxysilane, monocyclopentadienylmonoethoxysilane, monocyclopentadienylmonophenoxysilane, monocyclopentadienylmonomethylmonochlorosilane, monocyclopentadienylmonoethylmonochlorosilane, monocyclopentadienylmonomethyldichlorosilane, monocyclopentadienylmonoethyldichlorosilane, monocyclopentadienyltrichlorosilane, dicyclopentadienylmonomethylsilane, dicyclopentadienylmonoethylsilane, dicyclopentadienyldimethylsilane, dicyclopentadienyldiethylsilane, dicyclopentadienylmethylethylsilane, dicyclopentadienyldipropylsilane, dicyclopentadienylethylpropylsilane, dicyclopentadienyldiphenylsilane, dicyclopentadienylphenylmethylsilane, dicyclopentadienylmethylchlorosilane, dicyclopentadienylethylchlorosilane, dicyclopentadienyldichlorosilane, dicyclopentadienylmonomethoxysilane, dicyclopentadienylmonoethoxysilane, dicyclopentadienylmonomethoxymonochlorosilane, dicyclopentadienylmonoethoxymonochlorosilane, tricyclopentadienylmonomethylsilane, tricyclopentadienylmonoethylsilane, tricyclopentadienylmonomethoxysilane, tricyclopentadienylmonoethoxysilane, tricyclopentadienylmonochlorosilane, 3-methylcyclopentadienylsilane, bis-3-methylcyclopentadienylsilane, 3-methylcyclopentadienylmethylsilane, 1,2-dimethylcyclopentadienylsilane, 1,3-dimethylcyclopentadienylsilane, 1,2,4-trimethylcyclopentadienylsilane, 1,2,3,4-tetramethylcyclopentadienylsilane, pentamethylcyclopentadienylsilane, monoindenylsilane, diindenylsilane, triindenylsilane, tetraindenylsilane, monoindenylmonomethylsilane, monoindenylmonoethylsilane, monoindenyldimethylsilane, monoindenyldiethylsilane, monoindenyltrimethylsilane, monoindenyltriethylsilane, monoindenylmonomethoxysilane, monoindenylmonoethoxysilane, monoindenylmonophenoxysilane, monoindenylmonomethylmonochlorosilane, monoindenylmonoethylmonochlorosilane, monoindenylmonomethyldichlorosilane, monoindenylmonoethyldichlorosilane, monoindenyltrichlorosilane, diindenylmonomethylsilane, diindenylmonoethylsilane, diindenyldimethylsilane, diindenyldiethylsilane, diindenylmethylethylsilane, diindenyldipropylsilane, diindenylethylpropylsilane, diindenyldiphenylsilane, diindenylphenylmethylsilane, diindenylmethylchlorosilane, diindenylethylchlorosilane, diindenyldichlorosilane, diindenylmonomethoxysilane, diindenylmonoethoxysilane, diindenylmonomethoxymonochlorosilane, diindenylmonoethoxymonochlorosilane, triindenylmonomethylsilane, triindenylmonoethylsilane, triindenylmonomethoxysilane, triindenylmonoethoxysilane, triindenylmonochlorosilane, 3-methylindenylsilane, bis-3-methylindenylsilane, 3-methylindenylmethylsilane, 1,2-dimethylindenylsilane, 1,3-dimethylindenylsilane, 1,2,4-trimethylindenylsilane, 1,2,3,4-tetramethylindenylsilane and pentamethylindenylsilane, preferably cyclopentadiene, substituted-cyclopentadiene, indene, substituted-indene or the like.

There may be used further compounds (C) of the above category which are bonded through alkylene groups of 2 - 8, preferably 2 - 3 carbon atoms, such compounds including bisindenylethane, bis(4,5,6,7-tetrahydro-1-indenyl) ethane, 1,3-propanedinylbisindene, 1,3-propanedinylbis(4,5,6,7-tetrahydro)indene, propylenebis(1-indene), isopropyl (l-indenyl)cyclopentadiene, diphenylmethylene(9-fluorenyl)cyclopentadiene, isopropylcyclopentadienyl-1-fluorene and the like.

Each of the foregoing compounds may be blended at will.

4. Compound (D) of the formula

$$R^5R^6C = CR^7R^8 \qquad III,$$

or

$$R^9C \equiv CR^{10} \qquad IV$$

wherein $R^5$ through $R^{10}$ each are hydrogen or a $C_1$ - $C_{24}$, preferably $C_1$ - $C_{12}$, more preferably $C_1$ - $C_8$ hydrocarbon group.

The above hydrocarbon group includes an alkyl group such as methyl, ethyl, propyl, butyl, pentyl, hexyl and octyl; an alkenyl group such as vinyl and allyl; an aryl group such as phenyl, tolyl and xylyl; and an aralkyl group such as benzyl, phenethyl, styryl and neophyl.

Specific examples of the Compound (D) include 1-olefin, an olefifn having a branched structure, an inner olefin, 1-alkyne and an inner alkyne, specifically includes 1-olefin such as ethylene, propylene, 1-butene, 1-pentene, 1-hexene, 1-heptene, 1-octene, 1-nonene, 1-decene, 1-undesene, 1-dodesene, 1-tridesene, 1-tetradesene, 1-pentadesene, 1-hexadesene, 1-heptadesene, 1-octadesene, 1-nonadesene, 1-eicosene; sis- or tris-olefin such as 2-butene, 2-pentene, 2-hexene, 2-heptene, 2-octene, 2-nonene, 2-decene, 2-undecene, 2-dodecene, 2-tridecene, 2-tetradecene, 2-pentadecene, 2-hexadecene, 2-heptadecene, 2-octadecene, 2-nonadecene, 2-eicosene, 3-hexene, 3-heptene, 3-octene, 3-nonene, 3-decene, 3-undecene, 3-dodecene, 3-tridecene, 3-tetradecene, 3-pentadecene, 3-hexadecene, 3-heptadecene, 3-octadecene, 3-nonadecene, 3-eicosene, 4-octene, 4-nonene, 4-decene, 4-undecene, 4-dodecene, 4-tridecene, 4-tetradecene, 4-pentadecene, 4-hexadecene, 4-heptadecene, 4-octadecene, 4-nonadecene, 4-eicosene; branched compounds such as 2-methyl-1-propene, 2-methyl-1-butene, 2-methyl-1-pentene, 2-methyl-1-hexene, 2-methyl-1-heptene, 2-methyl-1-octene, 2-methyl-1-nonene, 2-methyl-1-decene, 2-methyl-1-undecene, 2-methyl-1-dodecene, 2-methyl-1-tridecene, 2-methyl-1-tetradecene, 2-methyl-1-pentadecene, 2-methyl-1-hexadecene, 2-methyl-1-heptadecene, 2-methyl-1-octadecene, 2-methyl-1-nonadecene, 2-methyl-1-eicosene, 2-ethyl-1-butene, 2-ethyl-1-pentene, 2-ethyl-1-hexene, 2-ethyl-1-heptene, 2-ethyl-1-octene, 2-ethyl-1-nonene, 2-ethyl-1-decene, 2-ethyl-1-undecene, 2-ethyl-1-dodecene, 2-ethyl-1-tridecene, 2-ethyl-1-tetradecene, 2-ethyl-1-pentadecene, 2-ethyl-1-hexadecene, 2-ethyl-1-heptadecene, 2-ethyl-1-octadecene, 2-ethyl-1-nonadecene, 2-ethyl-1-eicosene, 2-methyl-2-butene, 2-methyl-2-pentene, 2-methyl-2-hexene, 2-methyl-2-heptene, 2-methyl-2-octene, 2-methyl-2-nonene, 2-methyl-2-decene, 2-methyl-2-undecene, 2-methyl-2-dodecene, 2-methyl-2-tridecene, 2-methyl-2-tetradecene, 2-methyl-2-pentadecene, 2-methyl-2-hexadecene, 2-methyl-2-heptadecene, 2-methyl-2-octadecene, 2-methyl-2-nonadecene, 2-methyl-2-eicosene, 2,3-dimethyl-2-butene, 2,3-dimethyl-2-pentene, 2,3-dimethyl-2-hexene, 2,3-dimethyl-2-heptene, 2,3-dimethyl-2-octene, 2,3-dimethyl-2-nonene, 2,3-dimethyl-2-decene, 2,3-dimethyl-2-undecene, 2,3-dimethyl-2-dodecene, 2,3-dimethyl-2-tridecene, 2,3-dimethyl-2-tetradecene, 2,3-dimethyl-2-pentadecene, 2,3-dimethyl-2-hexadecene, 2,3-dimethyl-2-heptadecene, 2,3-dimethyl-2-octadecene, 2,3-dimethyl-2-nonadecene, 2,3-dimethyl-2-eicosene, 2,3-butyl-1-butene, 2,3-butyl-1-pentene, 2,3-butyl-1-octene, 2,3-butyl-1-hexene, 2,3-butyl-1-heptene, 2,3-butyl-1-nonene, 2,3-butyl-1-decene.

There may be also used one or more of alkyne such as acetylene, propyne, 1-butyne, 1-pentyne, 1-hexyne, 1-heptyne, 1-octyne, 1-nonyne, 1-decyne, 1-undecyne, 1-dodecyne, 1-tridecyne, 1-tetradecyne, 1-pentadecyne, 1-hexadecyne, 1-heptadecyne, 1-octadecyne, 1-nonadecyne 1-eicosyne, 2-butyne, 2-pentyne, 2-hexyne, 2-heptyne, 2-octyne, 2-nonyne, 2-decyne, 2-undecyne, 2-dodecyne, 2-tridecyne, 2-tetradecyne, 2-pentadecyne, 2-hexadecyne 2-heptadecyne, 2-octadecyne, 2-nonadecyne, 2-eicosyne, 3-hexyne, 3-heptyne, 3-octyne, 3-nonyne, 3-decyne, 3-undecyne, 3-dodecyne, 3-tridecyne, 3-tetradecyne, 3-pentadecyne, 3-hexadecyne, 3-heptadecyne, 3-octadecyne, 3-nonadecyne, 3-eicosyne, 4-octyne, 4-nonyne, 4-decyne, 4-undecyne, 4-dodecyne, 4-tridecyne 4-tetradecyne, 4-pentadecyne,

4-hexadecyne, 4-heptadecyne, 4-octadecyne, 4-nonadecyne, 4-eicosyne and the like.

There may be also used one or more of diphenylacetylene, ditolylacetylene, phenylacetylene, tolylacetylene, 1-phenyl-1-propyne, 1-phenyl-1-butyne, 1-phenyl-1-pentyne, 1-phenyl-1-hexyne, 1-phenyl-1-heptyne, 1-phenyl-1-octyne, 1-phenyl-1-nonyne, 1-phenyl-1-decyne and the like.

There may be further used as the Compound (D) one or more of styrene, α-methylstyrene, β-methylstyrene, trans-stilbene, sis-stilbene, α-ethylstyrene, β-ethylstyrene, α,β-dimethylstyrene, α,β-diethylstyrene, diphenylacetyrene, ditolylacetyrene, phenylacetyrene, tolylacetyrene, 1-phenyl-1-propyne, 1-phenyl-1-butyne, 1-phenyl-1-pentyne, 1-phenyl-1-hexyne, 1-phenyl-1-heptyne, 1-phenyl-1-octyne, 1-phenyl-1-nonyne, 1-phenyl-1-decyne and the like.

Particularly preferred examples are an inner olefin, a branched olefin, an inner alkyne or an aryl alkyne and more preferred are a $C_6$ - $C_8$ inner olefin, the branched olefin, the inner alkyne, phenylacetylene and diphenylacetylene.

The present invention further contemplates the addition of modified organoaluminum compounds of the following definition.

5. Modified organoaluminum compound (E) having Al-O-Al bonds

The modified organoaluminum compound (E) for addition to the inventive catalyst components (A) - (D) results from the reaction of an organoaluminum compound with water, and it has in its molecule an Al-O-Al bond numbering from 1 to 100, preferably from 1 to 50. The reaction is effected usually in the presence of an inert hydrocarbon, typically an aliphatic hydrocarbon such as pentane, hexane, heptane and the like, an alicyclic hydrocarbon such as cyclohexane or methylcyclohexane or an aromatic hydrocarbon such as benzene, toluene, xylene and the like. Particularly preferred are the aliphatic and aromatic hydrocarbons.

Suitable organoaluminum compounds are those of the formula

$$R^{17}{}_{c}AlX^{7}{}_{3-c} \qquad \text{VII}$$

where $R^{17}$ is a hydrocarbon group such as an alkyl, alkenyl, aryl and aralkyl group of 1 to 18, preferably 1 to 12 carbon atoms; $X^7$ is a halogen or hydrogen atom; and c is an integer of $1 \leq c \leq 3$. Trialkylaluminums are preferred in which the alkyl group is a methyl, ethyl, propoyl, isopropyl, butyl, isobutyl, pentyl, hexyl, octyl, decyl or dodecyl group, among which the methyl group is particularly preferred.

The mol ratio of water to organoaluminum compound is in the range of 0.25:1 to 1.2:1, preferably 0.5:1 to 1:1. Reaction conditions may be at from -70 to 100°C, preferably -20 to 20°C, and for 5 minutes to 24 hours, preferably 10 minutes to 5 hours. There may be used a water of crystallization contained in a hydrate such as copper sulfate hydrate, aluminum sulfate hydrate or the like. Alternatively, a supply of water may be sought from such materials which can produce water in the reaction system. It has been found that methylaluminoxane, a reaction product of an alkylaluminum and water, is particularly suitable for use as the component (E). Any of the above modified organoaluminum compounds may be used in combination.

6. Inorganic and/or particulate polymer carrier (F)

The term inorganic carrier as used herein denotes such a material which may be intrinsically in the form of powder, granule, flake, foil or fiber, but whatever the shape may be, it should be 5 - 200 μm, preferably 10 - 100 μm in maximum length. The inorganic carrier is preferably porous, having a surface area of 50 - 1,000 $m^2/g$ and a pore volume of 0.05 - 3 $cm^3/g$. It may be chosen from the group of a carbonaceous material, a metal, a metal oxide, a metal chloride and a metal carbonate, or a mixture thereof, which is calcined usually at 200° - 900°C in the air, nitrogen, argon or other inert gas. Suitable metals for the inorganic carrier (F) are aluminum and nickel. Eligible metal oxides are Group I - VIII metal oxides of the Periodic Table including $SiO_2$, $Al_2O_3$, MgO, CaO, $B_2O_3$, $TiO_2$, $ZrO_2$, $Fe_2O_3$, $SiO_2 \cdot Al_2O_3$, $Al_2O_3 \cdot MgO$, $Al_2O_3 \cdot CaO$, $Al_2O_3 \cdot MgO \cdot CaO$, $Al_2O_3 \cdot MgO \cdot SiO_2$, $Al_2O_3 \cdot CuO$, $Al_2O_3 \cdot Fe_2O_3$, $Al_2O_3 \cdot NiO$ and $SiO_2 \cdot MgO$. The double oxides are not particularly restricted in terms of structure and component ratio when used in the invention. The metal oxides may have adsorbed thereto small quantities of moisture and may further contain a small amount of impurities.

The metal chloride used in the invention is a chloride of an alkaline metal or alkaline earth metal, preferably $MgCl_2$ and $CaCl_2$. Examples of the metal carbonate are magnesium carbonate, calcium carbonate and barium carbonate, while those of the carbonaceous material referred to herein are carbonblack and activated carbon. The above metal oxides are most preferred amongst the other inorganic carrier materials.

The term particulate polymer as used herein as a catalyst support or carrier (F) designates a solid particulate form of either thermoplastic or thermosetting resin having an average particle size 5-2,000 μm, preferably 10 - 100 μm, practically ranging from low molecular weight to ultra high molecular weight polymers as long as these polymers remain

solid during the stages of catalyst preparation and polymerization reaction. The starting polymer suitably has a molecular weight in the range of between 1,000 and 3,000,000 dependent upon the type chosen. Specific examples of the particulate polymer include particulate ethylene polymers, ethylene alpha-olefin copolymers, propylene polymers or copolymers, poly-1-butene and like polyolefins preferably of 2 - 12 carbon atoms, polyester, polyamide, polyvinylchloride, polymethylacrylate, polymethylmethacrylate, polystyrene, polynorbornen and naturally occurring polymers as well as mixtures thereof. The foregoing inorganic and particulate polymer carriers per se may be used as component (F) according to the invention. Alternatively, they may be pretreated with an organoaluminum compound such as trimethylaluminum, triethylaluminum, triisobutylaluminum, tri-n-hexylaluminum, dimethylaluminum chloride, diethylaluminum chloride, diethylmonoethoxyaluminum, triethoxyaluminum, or a silane compound.

The inorganic carrier may be used after treatment with an active hydrogen-containing compound such as alcohol and aldehydes, an electron-donative compound such as ester and ether, or an alcoxide-containing compound such as tetraalcoxysilicate, trialcoxyaluminum and transition-metal tetraalcoxide.

The carriers may be contacted with various pretreating compounds in an atmosphere of an inert gas such as nitrogen or argon in the presence of an inert liquid hydrocarbon such as an aromatic hydrocarbon (6-12 carbon atoms) including benzene, toluene, xylene and ethylbenzene or an aliphatic or alicyclic hydrocarbon (5 - 12 carbon atoms) including heptane, hexane, decane, dodecane and cyclohexane, with or without stirring at a temperature of -100° - 200°C, preferably -50° - 100°C for 30 minutes to 50 hours, preferably 1 - 24 hours. This pretreatement reaction is carried out preferably in the presence of a solvent of an aromatic hydrocarbon such as benzene, toluene, xylene and ethylbenzene in which the pretreating compounds are rendered soluble. The resulting reaction mixture may be readily put to use for the preparation of catalyst components without having to remove the solvent. Part or all of the aromatic hydrocarbon may be removed from the resulting reaction mixture. Alternatively, in the case where a modified aluminum is used as the pretreating compound, the pretreated carrier may be precipitate and recovered from the reaction mixture by adding an inert liquid hydrocarbon such as pentane, hexane, decane, dodecane or cyclohexane.

The amount of the pretreating compound is usually 0.01 - 10,000 millimoles, preferably 0.1 - 100 millimoles (or Al atom concentration in the case of a modified aluminum compound) per gram of the carrier.

The inventive catalyst compositions may be prepared by mutual contact of the basic components (A) - (D) in the following sequences which are indicated for the sake of brevity by the arrows and which are given for purposes of illustration not in the restrictive sense.

1. (A) ← (B) ← (C) ← (D)
2. (A) ← (C) ← (B) ← (D)
3. (A) ← (C) ← (D) ← (B)
4. (A) ← (D) ← (C) ← (B)
5. (B) ← (A) ← (C) ← (D)
6. (B) ← (C) ← (A) ← (D)
7. (B) ← (C) ← (D) ← (A)
8. (B) ← (D) ← (C) ← (A)
9. (C) ← (A) ← (B) ← (D)
10. (C) ← (A) ← (D) ← (B)
11. (C) ← (B) ← (A) ← (D)
12. (C) ← (B) ← (D) ← (A)
13. (C) ← (D) ← (A) ← (B)
14. (C) ← (D) ← (B) ← (A)
15. (D) ← (A) ← (C) ← (B)
16. (D) ← (B) ← (C) ← (A)
17. (D) ← (C) ← (A) ← (B)
18. (D) ← (C) ← (B) ← (A)

The component (E) may be added in the following sequences which are only illustrative and not restricting the invention thereto.

19. Add (A) through (E) simultaneously.
20. Add (E) to a mixture of (A), (B), (C) and (D).
21. Add (D) to a mixture of (A), (B), (C) and (E).
22. Add (B) to a mixture of (A), (C), (D) and (E).
23. Add (A) to a mixture of (B), (C), (D) and (E).
24. Add (A) and (E) to a mixture of (B), (C) and (D).
25. Add (A) and (D) to a mixture of (B), (C) and (E).

26. Add (A) and (B) to a mixture of (C), (D) and (E).
27. Add (B) and (D) to a mixture of (A), (C) and (E).
28. Add (B) and (E) to a mixture of (A), (C) and (D),
29. Add (D) and (E) to a mixture of (A), (B) and (C),
30. Add a mixture of (A), (B), (C) and (E) to a mixture of (A), (B), (C) and (D).
31. Add a mixture of (A), (C), (D) and (E) to a mixture of (A), (B), (C) and (D).
32. Add a mixture of (B), (C), (D) and (E) to a mixture of (A), (B), (C) and (D).
33. Add a mixture of (A), (C), (D) and (E) to a mixture of (A), (B), (C) and (E).
34. Add a mixture of (B), (C), (D) and (E) to a mixture of (A), (B), (C) and (E).
35. Add a mixture of (B), (C), (D) and (E) to a mixture of (A), (C), (D) and (E).
36. Add (A) through (E) simultaneously and then add (A).
37. Add (A) through (E) simultaneously and then add (B).
38. Add (A) through (E) simultaneously and then add (C).
39. Add (A) through (E) simultaneously and then add (D).
40. Add (A) through (E) simultaneously and then add (E).
41. Add (E) and then (A) to a mixture of (A) - (D).
42. Add (E) and then (B) to a mixture of (A) - (D).
43. Add (E) and then (C) to a mixture of (A) - (D).
44. Add (E) and then (D) to a mixture of (A) - (D).
45. Add (E) and then (E) to a mixture of (A) - (D).
46. Add (D) and then (A) to a mixture of (A), (B), (C) and (E).
47. Add (D) and then (B) to a mixture of (A), (B), (C) and (E).
48. Add (D) and then (C) to a mixture of (A), (B), (C) and (E).
49. Add (D) and then (D) to a mixture of (A), (B), (C) and (E).
50. Add (D) and then (E) to a mixture of (A), (B), (C) and (E).
51. Add (B) and then (A) to a mixture of (A), (C), (D) and (E).
52. Add (B) and then (B) to a mixture of (A), (C), (D) and (E).
53. Add (B) and then (C) to a mixture of (A), (C), (D) and (E).
54. Add (B) and then (D) to a mixture of (A), (C), (D) and (E).
55. Add (B) and then (E) to a mixture of (A), (C), (D) and (E).
56. Add (A) and then (A) to a mixture of (B), (C), (D) and (E).
57. Add (A) and then (B) to a mixture of (B), (C), (D) and (E).
58. Add (A) and then (C) to a mixture of (B), (C), (D) and (E).
59. Add (A) and then (D) to a mixture of (B), (C), (D) and (E).
60. Add (A) and then (E) to a mixture of (B), (C), (D) and (E).

The component (F), i.e. catalyst carrier, of the invention may be added initially to the basic components (A) - (D) or alternatively together with or after addition of the component (E) in any suitable sequences.

It has been found that the sequences 20 and 28 are particularly suited where component (D) is 1-olefin.

The contacting operation may be carried out in the presence of nitrogen, argon and other inert gas, or an inert liquid hydrocarbon solvent such as an aromatic hydrocarbon of 6 - 12 carbon atoms including benzene, toluene, xylene and ethylbenzene and an aliphatic or alicyclic hydrocarbon of 5 - 12 carbon atoms including heptane, hexane, decane, dodecane and cyclohexane, with or without stirring at a temperature of from -100°C to 200°C, preferably from -50° to 150°C, for a period of from 30 minutes to 50 hours, preferably from 1 to 24 hours.

In the case where component (D) is gaseous at room temperature, it should be held existent initially in a liquid hydrocarbon solvent by for instance bubbling under pressure or by cooling the solvent to mingle so as to facilitate contact with the other associated components of the invention. Component (D) should be present during contact of components (A) - (C) but may be removed in part or whole upon formation of the resultant catalyst.

Components (A) through (D) may be contacted together with use of the aforesaid various hydrocarbon solvents which may be the same or different throughout the stages of contacting sequences. In other words, if the aromatic hydrocarbon solvent is used in the first part of each sequence, it is not always necessary to remove that particular solvent in the latter half of the sequence, but may be removed if desired from the reaction mixture obtained during the first stage and replaced with the aliphatic or alicyclic hydrocarbon solvent in the latter stage of the contact operation.

The amount of addition of each of components (B) and (C) is in the range of 0.01 - 1,000 mols, preferably 0.1 - 100 mols, more preferably 0.5 - 50 mols, most preferably 1 - 20 mols per mol of component (A).

The amount of component (D) is in the range of 0.01 - 100 mols, preferably 0.1 - 50 mols, more preferably 0.5 - 20 mols, most preferably 1 - 10 mols per mol of component (A).

The amount of component (E) is represented by the atomic ratio of aluminum in (E) to transition metal $Me^1$ in

component (A) which is usually less than 100,000, generally in the range of 1 to 1,000, preferably 1 - 500, more preferably 5 - 100.

The amount of addition of component (F) is 1 gram per 0.0001 - 5, preferably 0.001 - 0.5, more preferably 0.01 - 0.1 millimol of component (A).

The catalyst components or compositions according to the invention, though generally in liquid phase, may be maintained in solid phase by means of precipitation and drying.

Preferred combinations of the various components (A) - (F) are shown below by way of example.

Combination I

| | |
|---|---|
| Component (A): | tetraalcoxyzirconium such as tetramethoxyzirconium and tetrabutoxyzirconium |
| Component (B): | trialkylaluminum such as trimethylaluminum, triethylaluminum and triisobutylaluminum |
| Component (C): | indene and indene derivative such as methylindene and cyclopentadiene and cyclopentadiene derivative such as methylcyclopentadiene, dimethylcyclopentadiene, propylcyclopentadiene, isopropylcyclopentadiene, butylcyclopentadiene, isobutylcyclopentadiene and sec-butylcyclopentadiene |
| Component (D): | inner olefin such as 2-octene, 4-octene, 2-hexene, 3-hexene and 2-butene and inner alkyne such as 2-octyne, 4-octyne, 2-hexyne, 3-hexyne and 2-butyne |
| Component (E): | methylaluminoxane |
| Component (F): | silica, alumina, silica-alumina and polyethylene powder |

Combination II

| | |
|---|---|
| Component (A): | tetraalkyl(aralkyl, aryl)zirconium such as tetramethylzirconium, tetrabenzylzirconium tetraneophylzirconium and tetraphenylzirconium |
| Component (B): | trialkylaluminum such as trimethylaluminum, triethylaluminum and triisobutylaluminum |
| Component (C): | the same as in combination I |
| Component (D): | the same as in combination I |
| Component (E): | the same as in combination I |
| Component (F): | the same as in combination I |

Combination III

| | |
|---|---|
| Component (A): | the same as in combination I |
| Component (B): | dialkylaluminumhydride such as diethylaluminumhydride and dibutylaluminumhydride |
| Component (C): | the same as in combination I |
| Component (D): | olefin each having a branched structure such as 2-methyl-1-hexene, 3-methyl-1-heptene, 2,3-dimethyl-1-butene, 3,3-dimethyl-1-hexene, 2,3-dimethyl-2-butene and 2-methyl-2-hexene and alkyne each having an aryl group such as diphenyl acetylene, phenyl acetylene, ditolyl acetylene and tolyl acetylene |
| Component (E): | the same as in combination I |
| Component (F): | the same as in combination I |

Combination IV

| | |
|---|---|
| Component (A): | the same as in combination II |
| Component (B): | trialkylaluminum such as trimethylaluminum, tributylaluminum and trihexylaluminum |
| Component (C): | the same as in combination I |
| Component (D): | olefin each having an aryl group such as stilbene, β-methylstyrene, β-butylstyrene and α-methylstyrene and alkyne each having an aryl group such as diphenyl acetylene, phenyl acetylene, ditolyl acetylene and tolylacetylene |
| Component (E): | the same as in combination I |
| Component (F): | the same as in combination I |

Combination V

| | |
|---|---|
| Component (A): | the same as in combination I |
| Component (B): | the same as in combination IV |

Component (C): compound including cyclopentadiene derivativeds such as ethylenebisindene, isopropylenecyclopentadiene, and diphenylsylyrene(1-cyclopentadienyl) fluorene; an indene derivative; and a fluorene derivative; that are bonded through an alkylene or sylyrene group.
Component (D): olefin each having a branched structure such as 2-methyl-1-hexene, 3-methyl-1-heptene, 2,3-dimethyl-1-butene, 3,3-dimethyl-1-hexene, 2,3-dimethyl-2-butene and 2-methyl-2-hexene and an inner alkyne such as 2-octyne, 4-octyne, 2-hexyne, 3-hexyne and 2-butyne
Component (E): the same as in combination I
Component (F): the same as in combination I

Combination VI

Component (A): alkoxychlorozirconium such as trimethoxyzirconiumchloride and dibutoxyzirconiumdichloride
Component (B): the same as in combination I
Component (C): the same as in combination I
Component (D): olefin each having a branched structure such as 2-methyl-1-hexene, 3-methyl-1-heptene, 2,3-dimethyl-1-butene, 3,3-dimethyl-1-hexene, 2,3-dimethyl-2-butene and 2-methyl-2-hexene
Component (E): the same as in combination I
Component (F): the same as in combination I

Combination VII

Component (A): the same as in combination I
Component (B): the same as in combination I
Component (C): the same as in combination I
Component (D): olefin each having an aryl group such as stilbene, β-methylstyrene, β-butylstyrene and α-methylstyrene.
Component (E): the same as in combination I
Component (F): the same as in combination I

Combination VIII

Component (A): the same as in combination II
Component (B): an alkyllithum compound and an alkylmagnesium compound such as butyllithum, methyllithum, dibutylmagnesium and ethylmagnesium
Component (C): the same as in combination I
Component (D): olefin each having an aryl group such as stilbene, β-methylstyrene, β-butylstyrene, and α-methylstyrene and inner alkyne such as 2-octyne, 4-octyne, 2-hexyne, 3-hexyne and 2-butyne.
Component (E): the same as in combination I
Component (F): the same as in combination I

Combination IX

Component (A): the same as in combination I
Component (B): the same as in combination I
Component (C): the same as in combination I
Component (D): 1-olefin such as 1-octene, 1-eicosene, 1-hexene and 1-butene
Component (E): the same as in combination I
Component (F): the same as in combination I

Combination X

Component (A): the same as in combination II
Component (B): trialkylaluminum such as trimethylaluminum, tributylaluminum and trihexylaluminum.
Component (C): the same as in combination I
Component (D): the same as in combination IX
Component (E): the same as in combination I
Component (F): the same as in combination I

Combination XI

| | |
|---|---|
| Component (A): | the same as in combination I |
| Component (B): | the same as in combination I |
| Component (C): | compound including cyclopentadiene derivatives such as ethylenebisindene, isopropylenebiscyclopentadiene, and diphenylsylyrene(1-cyclopentadienyl) fluorene; an indene derivative; and a fluorene derivative; that are bonded through an alkylene or sylyrene group. |
| Component (D): | olefins each having an aryl group such as stilbene, β-methylstyrene, β-butylstyrene and α-methylstyrene, and alkyne each having an aryl group such as diphenylacetylene, phenylacetylene, ditolylacetylene and tolylacetylene. |
| Component (E): | the same as in combination I |
| Component (F): | the same as in combination I |

The polymerization catalyst according to the invention is prepared by mutual contact of the various components (A) through (E) which may be effected internally or externally of the reaction system. Alternatively, some of the components may be contacted together externally of the reaction system and then contacted with the remaining components within the reaction system.

Starting olefins useful for the purpose of the invention are α-olefins, cyclic olefins, dienes, trienes and styrene homologs.

Eligible α-olefins are those having a carbon number of 2 to 12, preferably 2 to 8, and chosen from the group of ethylene, propylene, butene-1, hexene-1, 4-methylpentene-1 and the like. They may be homopolymerized or copolymerized as by alternating, random or block copolymerization processes. Exemplified as α-olefin copolymers are those of ethylene with an α-olefin comonomer of a carbon number of 3 to 12, preferably 3 to 8, such as ethylene-propylene, ethylene-butene-1, ethylene-hexene-1 or ethylene-4-methylpentene-1, or of propylene with an α-olefin comonomer of a carbon number of 3 to 12, preferably 3 to 8, such as propylene-butene-1, propylene-4-methylpentene-1, propylene-3-methylbutene-1, propylene-hexene-1 or propylene-octene-1. In either copolymer, the content of the comonomer may be variable within the range of less than 90% by mol of total monomer. Generally, ethylene-based copolymers have a comonomer content of not more than 40%, preferably smaller than 30%, more preferably below 20%, whereas propylene-based copolymers have a similar content in the range of 1 to 90%, preferably 5 to 90%, more preferably 10 to 70%, each such percentage being by mol based on total monomer.

The cyclic olefins are chosen from those having a carbon number of 3 - 24, preferably 3 - 18, exemplarily including cyclopropene, cyclobutene, cyclopentene, cyclohexene, 3-methylcyclohexene, cyclooctene, cyclodecene, cyclododecene, cyclotetradecene, cyclooctadecene, dicyclopentadiene, norbornene, 5-methyl-2-norbornene, 5-ethyl-2-norbornene, 5-isobutyl-2-norbornene, 5,6-dimethyl-2-norbornene, 5,5,6-trimethyl2-norbornene and ethylidenenorbornene.

These cyclic olefins are usually subjected to copolymerization with the aforesaid α-olefins, in which instance the content of the reactant cyclic olefin in the resulting copolymer is less than 50 mol%, usually in the range of 1 - 50 mol%, preferably 2 - 50 mol%.

Suitable dienes and trienes are chain polyenes of the formula

$$CH_2CH(CH)_x(CHCH_2)_y$$

wherein x is an integer of 1 or 2, and y is 0 - 20, preferably 2 - 20.

Examples of the above polyenes include butadiene, 1,4-hexadiene, 1,5-hexadiene, 1,9-decadiene, 1,13-tetradecadiene, 2,6-dimethyl-1,5-heptadiene, 2-methyl-2,7-octadiene, 2,7-dimethyl-2,7-octadiene and 1,5,9-decatriene.

Chain dienes or trienes copolymerizable with a given α-olefin are usually contained in the copolymer in an amount of 0.1 to 50% by mol, preferably 0.2 to 10% by mol.

Eligible styrene homologs are styrene and styrene derivatives such as t-butylstyrene, α-methylstyrene, p-methylstyrene, divinylbenzene, 1,1-diphenylethylene, N,N-dimethyl-p-aminoethylstyrene, N,N-diethyl-p-aminostyrene and the like.

The catalyst of the invention may be suitably used to reform olefin homopolymers or copolymers by further polymerization with a polar monomer such as an unsaturated carboxylate including methyl acrylate, methyl methacrylate, butyl methacrylate, dimethyl maleate, diethyl maleate, monomethyl maleate, diethyl fumarate, dimethyl itaconate and the like. The content of the polar monomer in the reformed polymer is usually in the range of 0.1 to 10% by mol, preferably 0.2 to 2% by mol.

The inventive catalyst may be applied to slurry, solution and vapor polymerization processes. Slurry and vapor phase modes of reaction may be conveniently chosen which are conducted in a substantially oxygen-free, moisture-free state and in the presence of or in the absence of an inert solvent such as aliphatic hydrocarbons including hexane, heptane and the like, aromatic hydrocarbons including benzene, toluene, xylene and the like and alicyclic hydrocarbons including cyclohexane, methylcyclohexane and the like. Reaction temperatures may be at from 20 to 200°C, preferably 50 to 100°C, reaction pressures at from atmospheric to 70 kg/cm$^2$G, preferably atmospheric to 20 kg/cm$^2$G and reaction timelengths at from 5 minutes to 10 hours, preferably 5 minutes to 5 hours.

The molecular weight of a polymer to be formed can be effectively controlled by feeding a predetermined amount of hydrogen into the reaction system, although this control may be also effected by adjusting the reaction temperature, molar ratio of the catalyst and other parameters.

There may be used some scavengers for removing moisture from the reaction system. Such scavengers include a trialkylaluminum such as trimethylaluminum, triethylaluminum and triisobutylaluminum, the aforesaid modified organoaluminum as well as a modified organoaluminum having a branched alkyl group.

The inventive catalyst may be suitably used for a multi-stage mode of polymerization involving different hydrogen concentrations, monomer concentrations, polymerization pressures and temperatures and other reaction parameters.

It is also possible to prepare beforehand a pre-catalyst containing a small amount of a polymer (produced according to the invention) and use such pre-catalyst for full-scale polymerization of olefins.

The invention will be further described by way of the following examples.

Preparation of Modified Organoaluminum Compound (Methylaluminoxane)

13 grams of cupric sulfate pentahydrate were taken into a 300 ml three-necked flask equipped with an electromagnetic stirrer and suspended in 50 ml of toluene. 150 ml of trimethylaluminum (1 mmol/ml Al concentration) were added in droplets to the resulting suspension at 0°C over 2 hours. Reaction was continued at 25°C for 24 hours. The reaction product was filtrated with toluene removed, thereby obtaining 4 grams of a white crytalline methylalminoxane (MAO).

Evaluation of Polymer Properties

| | |
|---|---|
| Melt Index (MI): | measured in accordance with ASTM D 1238-57T at 190°C with load of 2.16 kg. |
| Density: | measured in accordance with ASTM D 1505-68. |
| Melting Point: | measured by a differential scanning calorimeter (DSC) where a 5 mg sample was held at 180°C for 3 minutes, cooled to 0°C at 10°C per minute, held at 0°C for 10 minutes and finally warmed at 10°C per minute. |
| Molecular Weight Distribution (Mw/Mn): | measured of a flow of 1.0 ml/min. by a gel permeation chromatography at 135°C using an orthodichlorobenzene solvent. |

Example 1

Preparation of Catalyst Components

A 300 ml three-necked, stirrer equipped flask was fed with 100 ml refined toluene, 3.8 grams $Zr(On\text{-}Bu)_4$, 9.3 grams indene and 11.2 grams cis-2-octene and stirred at room temperature for 30 minutes. The reaction mixture was added slowly with droplets of 19.8 ml triisobutylaluminum at room temperature over a period of two hours and thereafter stirred at room temperature for one hour until there was obtained a catalyst component solution.

Polymerization

A 3 liter stainless steel autoclave equipped with stirrer was purged with nitrogen, followed by addition of 200 grams ocean sand, a portion of the above catalyst component solution containing 1 mg Zr and 1 ml solution of 1 mmol/ml methylaluminoxane. The admixture was heated to 75°C and charged with a mixed gas (butene-1/ethylene mol ratio 0.25) to a pressure level of 9 kgf/cm$^2$G thereby initiating the polymerization. The reaction was continued for one hour with a continuous charge of a mixed gas (butene-1/ethylene mol ratio 0.05) with a total pressure maintained at 9 kgf/cm$^2$G. Upon completion of the polymerization reaction, excess gases were expelled and the autoclave was cooled, followed by removal of the sand thereby providing 213 grams white colored polymer. Analysis indicated a catalytic activity of 213 kg/g.Zr, a melt flow rate (MFR) of 2.3 g/10 min., a density of 0.9219 g/cm$^3$, a melting point (MP) of 114.5°C and an average molecular weight (Mw/Mn) of 3.1.

Example 2

Preparation of Catalyst Components

A 200 ml three-necked, stirrer equipped flask was in nitrogen atmosphere fed with 50 ml refined toluene, 3.3 grams $Zr(Oi\text{-}Pr)_4$, 2.6 grams cyclopentadiene and 9.8 grams 2-methyl-1-hexene and stirred at room temperature for 30 minutes. The reaction mixture was added slowly with droplets of 13.7 ml triethylaluminum at room temperature over a period of 3 hours and thereafter stirred at room temperature for 2 hours until there was obtained a catalyst component solution.

Contact between Catalyst Component and Methylaluminoxane

A 50 cc flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 1 was followed except for the use of the above contact reaction product whereby there was obtained 148 grams white polymer having a catalytic activity of 148 kg/g.Zr, MFR of 5.4 g/10 min., a density of 0.9238 g/cm$^3$, MP of 114.8°C and Mw/Mn of 2.9.

Example 3

Preparation of Catalyst Components

A 200 ml three-necked, stirrer equipped flask was fed in nitrogen atmosphere with 50 ml refined toluene, 3.8 grams $Zr(On\text{-}Bu)_4$, 7.4 grams dimethyl cyclopentadiene and 8.4 grams 2,3-dimethyl-2-butene, and stirred at room temperature for 30 minutes. The reaction mixture was added slowly with droplets of 34.4 ml trihexylaluminum at room temperature over a period of 3 hours and thereafter stirred at room temperature for 2 hours until there was obtained a catalyst component solution.

Contact between Catalyst Component and Methylaluminoxane

A 50 cc flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 205 grams white polymer having a catalytic activity of 205 kg/g.Zr, MFR of 0.07 g/10 min., a density of 0.9227 g/cm$^3$, MP of 114.0°C and Mw/Mn of 2.8.

Example 4

Preparation of Catalyst Components

A 200 ml three-necked, stirrer equipped flask was fed in nitrogen atmosphere with 50 ml refined toluene, 2.7 grams $Zr(OEt)_4$, 11.6 grams indene and 18 grams stilbene and stirred at room temperature for 30 minutes. The reaction mixture was added slowly with droplets of 27.5 ml trihexylaluminum at room temperature over a period of 3 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 186 grams white polymer having a catalytic activity of 186 kg/g.Zr, MFR of 2.1 g/10 min., a density of 0.9240 g/cm$^3$, MP of 114.9°C and Mw/Mn of 3.2.

Example 5

Preparation of Catalyst Components

A 200 ml three-necked, stirrer equipped flask was fed in nitrogen atmosphere with 50 ml refined toluene, 3.8 grams $Zr(OC_4H_9)_4$, 9.3 grams indene and 2.2 grams cis-2-octene and stirred at room temperature for 30 minutes. The reaction mixture was added slowly with droplets of 25.3 ml triisobutylaluminum at room temperature over a period of 3 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 179 grams white polymer having a catalytic activity of 179 kg/g.Zr, MFR of 2.4 g/10 min., a density of 0.9217 g/cm$^3$, MP of 114.0°C and Mw/Mn of 3.4.

Example 6

Preparation of Catalyst Components

A 200 ml three-necked, stirrer equipped flask was fed in nitrogen atmosphere with 50 ml refined toluene, 3.8 grams $Zr(OC_4H_9)_4$, 9.3 grams indene and 5.6 grams cis-2-octene and stirred at room temperature for 30 minutes. The reaction mixture was added slowly with droplets of 25.3 ml triisobutylaluminum at room temperature over a period of 3 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 208 grams white polymer having a catalytic activity of 208 kg/g.Zr, MFR of 2.6 g/10 min., a density of 0.9223 g/cm$^3$, MP of 114.5°C and Mw/Mn of 3.5.

Example 7

Preparation of Catalyst Components

A 200 ml three-necked, stirrer equipped flask was fed in nitrogen atmosphere with 50 ml refined toluene, 3.8 grams $Zr(OC_4H_9)_4$, 10.3 grams bisindenyl ethane and 3 grams cis-2-nonen and stirred at room temperature for 30 minutes. The reaction mixture was added slowly with droplets of 27.5 ml trihexylaluminum at room temperature over a period of one hour and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 210 grams white polymer having a catalytic activity of 210 kg/g.Zr, MFR of 0.5 g/10 min., a density of 0.9211 g/cm$^3$, MP of 113.9°C and Mw/Mn of 3.8.

Example 8

Preparation of Catalyst Components

A 200 ml three-necked, stirrer equipped flask was fed in nitrogen atmosphere with 50 ml refined toluene, 3.8 grams $Zr(OC_4H_9)_4$, 9.3 grams indene and 11.2 grams 1-octene and stirred at room temperature for 30 minutes. The reaction mixture was added slowly with droplets of 25.3 ml triisobutylaluminum at room temperature over a period of 2 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 2 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 140 grams white polymer having a catalytic activity of 140 kg/g.Zr, MFR of 2.0 g/10 min., a density of 0.9220 g/cm$^3$, MP of 114.6°C and Mw/Mn of 3.9.

Example 9

Preparation of Catalyst Components

A 200 ml three-necked, stirrer equipped flask was fed in nitrogen atmosphere with 50 ml refined toluene, 2.3 grams zirconium tetrachloride, 3.2 grams methylcyclopentadiene and 28 grams cis-2-decene and stirred at room temperature for 30 minutes. The reaction mixture was added slowly with droplets of 25.3 ml triisobutylaluminum at room temperature over a period of 2 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 0.56 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 190 grams white polymer having a catalytic activity of 190 kg/g.Zr, MFR of 17 g/10 min., a density of 0.9216 g/cm$^3$, MP of 114.0°C and Mw/Mn of 3.3.

Example 10

Preparation of Catalyst Components

A 200 ml three-necked, stirrer equipped flask was fed in nitrogen atmosphere with 50 ml refined toluene, 4.6 grams tetrabenzyl zirconium, 11 grams trimethylsilylcyclopentadiene and 9.8 grams cis-3-heptene and stirred at room temperature for 30 minutes. The reaction mixture was added slowly with droplets of 11 ml triethylaluminum at room temperature over a period of 2 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 0.56 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 220 grams white polymer having a catalytic activity of 220 kg/g.Zr, MFR of 0.9 g/10 min., a density of 0.9222 g/cm$^3$, MP of 114.3°C and Mw/Mn of 3.2.

Example 11

Preparation of Catalyst Components

A 200 ml three-necked, stirrer equipped flask was fed in nitrogen atmosphere with 50 ml refined toluene, 3.2 grams $Zr(OC_4H_9)_4$, 10.4 grams methylindene and 9.8 grams 2-methyl-2-hexene and stirred at room temperature for 30 minutes. The reaction mixture was added slowly with droplets of 12.3 grams diethylzinc at room temperature over a period of one hour and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 148 grams white polymer having a catalytic activity of 148 kg/g.Zr, MFR of 1.5 g/10 min., a density of 0.9226 g/cm$^3$, MP of 114.6°C and Mw/Mn of 3.1.

Example 12

Preparation of Catalyst Components

A 200 ml three-necked, stirrer equipped flask was fed in nitrogen atmosphere with 50 ml refined toluene, 3.8 grams $Zr(OC_4H_9)_4$, 9.8 grams n-butyl cyclopentadiene and 8.3 grams styrene and stirred at room temperature for 30 minutes. The reaction mixture was added slowly with droplets of 10 mols n-BuMgCl at room temperature over a period of one hour and thereafter stirred at room temperature for 2 hours until there was obtained a catalyst component solution.

Contact between Catalyst Component and Methylaluminoxane

A 50 ml flask was charged in nitrogen atmosphere 5 with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 153 grams white polymer having a catalytic activity of 153 kg/g.Zr, MFR of 1.9 g/10 min., a density of 0.9225 g/cm$^3$, MP of 114.3°C and Mw/Mn of 3.4.

Example 13

A 3 liter stainless steel autoclave equipped with stirrer was purged with nitrogen, followed by addition of 200 grams ocean sand, a portion of the catalyst component solution of Example 1 containing 1 milligram Zr and 1 ml solution of 1 mmol/ml of methylaluminoxane. The admixture was heated to 75°C and charged with an ethylene gas to a pressure level of 9 kgf/cm$^2$G thereby initiating the polymerization. The reaction was continued for one hour with a continuous charge of ethylene with a total pressure maintained at 9 kgf/cm$^2$G. Upon completion of the polymerization reaction, excess gases were expelled and the autoclave was cooled, followed by removal of the sand. Analysis of the resulting 186 grams white colored polymer indicated a catalytic activity of 186 kg/g.Zr, MFR of 1.9 g/10 min., a density of 0.9499 g/cm$^3$, MP of 132.0°C and Mw/Mn of 3.1.

Example 14

A 3 liter stainless steel autoclave equipped with stirrer was purged with nitrogen, followed by charging one liter toluene, a portion of the catalyst component solution of Example 7 containing 0.5 milligram Zr and methylaluminoxane in an amount of 100 by Zr/Al atomic ratio. The admixture was heated to 20°C and charged with propylene gas to a system pressure level of 4 kgf/cm$^2$G thereby initiating the polymerization. The reaction was continued for two hours with a continuous charge of ethylene with a total pressure maintained at 4 kgf/cm$^2$G. Upon completion of the polymerization reaction, excess gases were expelled and the autoclave was cooled. There was obtained 31 grams white polymer. Analysis indicated a catalytic activity of 63 kg/g.Zr, MP of 140.0°C and Mw/Mn of 2.9.

Example 15

Preparation of Catalyst Components

A 200 ml three-necked, stirrer equipped flask was fed in nitrogen atmosphere with 50 ml refined toluene, 3.4 grams $Ti(OC_4H_9)_4$, 9.3 grams indene and 9.0 grams cis-2-octene and stirred at room temperature for 30 minutes. The reaction mixture was added slowly with droplets of 20 ml triisobutylaluminum at room temperature over a period of one hour and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Ti and 2 ml solution of 1 mmol/ml of methylaluminoxane and shaken at room temperature for 30 minutes thereby providing a contact reaction product.

Polymerization

The procedure of Example 1 was followed except for he use of the contact reaction product of this example hereby there was obtained 143 grams white polymer having a catalytic activity of 143 kg/g.Ti, MFR of 0.9 g/10 min., a density of 0.9219 g/cm$^3$, MP of 97.3°C and Mw/Mn of 3.5.

Example 16

Preparation of Catalyst Components

A 200 ml three-necked, stirrer equipped flask was fed in nitrogen atmosphere with 50 ml refined toluene, 4.1 grams $Hf(OC_4H_9)_4$, 9.3 grams indene and 9.0 grams is-2-octene and stirred at room temperature for 30 inutes. The reaction mixture was added slowly with roplets of 20 ml triisobutylaluminum at room emperature over a period of one hour and thereafter tirred at room temperature for 2 hours until there was btained a catalyst component solution.

Contact between Catalyst Component and Methylaluminoxane

A 50 ml flask was charged in nitrogen atmosphere rith a portion of the aforesaid catalyst component solution containing 1 mg.Hf and 2 ml solution of 1 mmol/ml of methylaluminoxane and shaken at room temperature for 30 minutes thereby providing a contact reaction product.

Polymerization

The procedure of Example 1 was followed except for the use of the contact reaction product of this example whereby there was obtained 143 grams white polymer having a catalytic activity of 143 kg/g.Hf, MFR of 0.03 g/10 min., a density of 0.9231 g/cm$^3$, MP of 114.3°C and Mw/Mn of 3.8.

Example 17

Preparation of Catalyst Components

A 300 ml three-necked, stirrer equipped flask was fed in nitrogen atmosphere with 100 ml refined toluene, 3.8 grams $Zr(On\text{-}Bu)_4$, 9.3 grams indene and 10 grams phenylacetylene and stirred at room temperature for 30 minutes. The reaction mixture was added slowly with droplets of 19.8 ml triisobutylaluminum at room temperature over a period of 2 hours and thereafter stirred at room temperature for one hour until there was obtained a catalyst component solution.

Polymerization

A 3 liter stainless steel autoclave equipped with stirrer was purged with nitrogen, followed by addition of 200 grams ocean sand, a portion of the above catalyst component solution containing 1 milligram Zr and 1 ml solution of 1 mmol/ml of methylaluminoxane. The admixture was heated to 75°C and charged with a mixed gas (butene-1/ethylene mol ratio 0.25) to a pressure level of 9 kgf/cm$^2$G thereby initiating the polymerization. The reaction was continued for one hour with a continuous charge of a mixed gas (butene-1/ethylene mol ratio 0.05) with a total pressure maintained at 9 kgf/cm$^2$G. Upon completion of the polymerization reaction, excess gases were expelled and the autoclave was cooled, followed by removal of the sand. Analysis of the resulting 221 kg white polymer indicated a catalytic activity of 221 kg/g.Zr, MFR of 1.8 g/10 min., a density of 0.9225 g/cm$^3$, MP of 116.5°C and Mw/Mn of 3.6.

Example 18

Preparation of Catalyst Components

A 200 ml three-necked, stirrer equipped flask was fed in nitrogen atmosphere with 50 ml refined toluene, 3.3 grams $Zr(Oi\text{-}Pr)_4$, 2.6 grams cyclopentadiene and 8 grams 2-hexyne-1 and stirred at room temperature for 30 minutes. The reaction mixture was added slowly with droplets of 13.7 ml triethylaluminum at room temperature over a period of 3 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 17 was followed except for the use of the contact reaction product of this example whereby there was obtained 115 grams white polymer having a catalytic activity of 115 kg/g.Zr, MFR of 7.1 g/10 min., a density of 0.9255 g/cm$^3$, MP of 113.7°C and Mw/Mn of 3.9.

Example 19

Preparation of Catalyst Components

A 200 ml three-necked, stirrer equipped flask was fed in nitrogen atmosphere with 50 ml refined toluene, 3.8 grams $Zr(On\text{-}Bu)_4$, 11 grams diphenylacetylene and 9.9 grams dimethylcyclopentadiene and stirred at room temperature for 30 minutes. The reaction mixture was added slowly with droplets of 34.4 ml trihexylaluminum at room temperature over a period of 3 hours and thereafter stirred at room temperature for 2 hours until there was obtained a catalyst component solution.

Contact between Catalyst component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 17 was followed except for the use of the contact reaction product of this example whereby there was obtained 205 grams white polymer having a catalytic activity of 205 kg/g.Zr, MFR of 0.11 g/10 min., a density of 0.9202 g/cm$^3$, MP of 111.2°C and Mw/Mn of 3.2.

Example 20

Preparation of Catalyst Components

A 200 ml three-necked, stirrer equipped flask was fed in nitrogen atmosphere with 50 ml refined toluene, 2.7 grams $Zr(OEt)_4$, 11.6 grams indene and 19 grams 4-octyne and stirred at room temperature for 30 minutes. The reaction mixture was added slowly with droplets of 27.5 ml trihexylaluminum at room temperature over a period of 3 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 17 was followed except for the use of the contact reaction product of this example whereby there was obtained 178 grams white polymer having a catalytic activity of 178 kg/g.Zr, MFR of 2.7 g/10 min., a density of 0.9211 g/cm$^3$, MP of 111.1°C and Mw/Mn of 3.6.

Example 21

Preparation of Catalyst Components

A 200 ml three-necked, stirrer equipped flask was fed in nitrogen atmosphere with 50 ml refined toluene, 3.8 grams $Zr(OC_4H_9)_4$, 9.3 grams indene and 6.2 grams ditolylacetylene and stirred at room temperature for 30 minutes. The reaction mixture was added slowly with droplets of 25.3 ml triisobutylaluminum at room temperature over a period of 3 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 17 was followed except for the use of the above contact reaction product whereby there was obtained 167 grams white polymer having a catalytic activity of 167 kg/g.Zr, MFR of 2.2 g/10 min., a density of 0.9221 g/cm$^3$, MP of 113.3°C and Mw/Mn of 3.7.

Example 22

Preparation of Catalyst Components

A 200 ml three-necked, stirrer equipped flask was fed in nitrogen atmosphere with 50 ml refined toluene, 3.8 grams $Zr(OC_4H_9)_4$, 9.3 grams indene and 56 grams diphenylacetylene and stirred at room temperature for 30 minutes. The reaction mixture was added slowly with droplets of 25.3 ml triisobutylaluminum at room temperature over a period of 3 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 17 was followed except for the use of the contact reaction product of this example whereby there was obtained 215 grams white polymer having a catalytic activity of 215 kg/g.Zr, MFR of 1.9 g/10 min., a density of 0.9219 g/cm$^3$, MP of 113.5°C and Mw/Mn of 2.9.

Example 23

Preparation of Catalyst Components

A 200 ml three-necked, stirrer equipped flask was fed in nitrogen atmosphere with 50 ml refined toluene, 3.8 grams $Zr(OC_4H_9)_4$, 10.3 grams bis-indenylethane and 3 grams 1-octyne and stirred at room temperature for 30 minutes. The reaction mixture was added slowly with droplets of 27.5 ml trihexylaluminum at room temperature over a period of one hour and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 1 ml solution of 1 mmol/ml of methylaluminoxane and shaken at room temperature for 30 minutes thereby providing a contact reaction product.

Polymerization

The procedure of Example 17 was followed except for the use of the contact reaction product of this example whereby there was obtained 199 grams white polymer having a catalytic activity of 199 kg/g.Zr, MFR of 1.1 g/10 min., a density of 0.9202 g/cm$^3$, MP of 112.8°C and Mw/Mn of 4.1.

Example 24

Preparation of Catalyst Components

A 200 ml three-necked, stirrer equipped flask was fed in nitrogen atmosphere with 50 ml refined toluene, 2.3 grams zirconium tetrachloride, 3.2 grams methylcyclopentadiene and 28 grams decyne and stirred at room temperature for 30 minutes. The reaction mixture was added slowly with droplets of 25.3 ml triisobutylaluminum at room temperature over a period of 2 hours and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Zr and 0.56 ml solution of 1 mmol/ml of methylaluminoxane and shaken at room temperature for 30 minutes thereby providing a contact reaction product.

Polymerization

The procedure of Example 17 was followed except for the use of the contact reaction product of this example whereby there was obtained 116 grams white polymer having a catalytic activity of 116 kg/g.Zr, MFR of 32 g/10 min., a density of 0.9285 g/cm$^3$, MP of 117.5°C and Mw/Mn of 5.2.

Example 25

A 3 liter stainless steel autoclave equipped with stirrer was purged with nitrogen, followed by addition of one liter toluene, a portion of the catalyst component solution of Example 7 containing 0.5 milligram Zr and methylaluminoxane in an amount of 100 by Zr/Al atomic ratio. The admixture was heated to 20°C and charged with propylene gas to a pressure level of 4 kgf/cm$^2$G thereby initiating the polymerization. The reaction was continued for 2 hours with a continuous charge of ethylene with a total pressure maintained at 4 kgf/cm$^2$G. Upon completion of the polymerization reaction, excess gases were expelled and the autoclave was cooled. Analysis of the resulting 18 grams white colored polymer indicated a catalytic activity of 36 kg/g.Zr, MP of 140.5°C and Mw/Mn of 2.8.

Example 26

Preparation of Catalyst Components

A 200 ml three-necked, stirrer equipped flask was fed in nitrogen atmosphere with 50 ml refined toluene, 3.4 grams $Ti(OC_4H_9)_4$, 9.3 grams indene and 12 grams diphenylacetylene and stirred at room temperature for 30 minutes. The reaction mixture was added slowly with droplets of 20 ml triisobutylaluminum at room temperature over a period of one hour and thereafter stirred at room temperature for 2 hours until there was obtained a catalyst component solution.

Contact between Catalyst Component and Methylaluminoxane

A 50 ml flask was charged in nitrogen atmosphere with a portion of the aforesaid catalyst component solution containing 1 mg.Ti and 2 ml solution of 1 mmol/ml of methylaluminoxane and shaken at room temperature for 30 minutes thereby providing a contact reaction product.

Polymerization

The procedure of Example 17 was followed except for the use of the contact reaction product of this example whereby there was obtained 105 grams white polymer having a catalytic activity of 105 kg/g.Ti, MFR of 3.2 g/10 min., a density of 0.9200 g/cm$^3$, MP of 96.3°C and Mw/Mn of 3.2.

Comparative Example 1

Preparation of Catalyst Components

A 300 ml three-necked, stirrer equipped flask was fed in nitrogen atmosphere with 100 ml refined toluene, 3.8 grams zirconium tetra-n-butoxide, 9.3 grams indene and stirred at room temperature for 30 minutes. The reaction mixture was added slowly with droplets of 25 ml triisobutylaluminum at room temperature over a period of 2 hours and thereafter stirred at room temperature for one hour until there was obtained a catalyst component solution.

Polymerization

The procedure of Example 1 was followed except for the use of the contact reaction product of this example whereby there was obtained 112 grams white polymer having a catalytic activity of 112 kg/g.Zr, MFR of 1.9 g/10 min., a density of 0.9223 g/cm$^3$ and MP of 114.8°C.

Example 27

Preparation of Transition Metal Catalyst Components

A 300 ml three-necked, stirrer equipped flask was charged in nitrogen atmosphere with 100 ml refined toluene, 3.8 grams $Zr(On\text{-}Bu)_4$, 9.3 grams indene and 11.2 grams cis-2-octene and stirred at room temperature for 30 minutes. The reaction mixture was added slowly with droplets of 19.8 ml triisobutylaluminum at room temperature over a period of 2 hours and thereafter stirred at room temperature for one hour until there was obtained a catalyst component solution.

Contact between Transition Metal Catalyst Components and Methylaluminoxane

A 50 ml flask was fed in nitrogen atmosphere with 1 ml of the above catalyst component solution and 14 ml solution of 1 mmol/ml of methylaluminoxane solution and stirred for one hour at room temperature.

Preparation of Solid Catalyst

A 50 ml flask was charged in nitrogen atmosphere with 2 grams $SiO_2$ (Fuji Davison #952, surface area 300 $m^2/g$) that had been calcined at 600°C for 5 hours and 50 ml refined toluene, followed by addition of all of the remaining catalyst component solution. The solvent was removed by means of a blow of nitrogen in vacuum thereby providing a fluidized or particulate solid catalyst.

Polymerization

A reaction loop was formed with a stirrer fitted stainless steel autoclave, a blower, a flow controller and a dry cyclon. The temperature of the autoclave was regulated with a flow of warm water through its jacket. The polymerization reaction was carried out via the above loop for 8 hours, in which the solid catalyst was taken at a rate of 100 mg/hr into the autoclave held at 60°C, followed by supply of a mixed gas of butene-1 and ethylene at a molar ratio of 0.25 in the gaseous phase to maintain a total system pressure at 8 $kgf/cm^2$. The resulting polymer was withdrawn intermittently while the gas in the system was being circulated. Analysis indicated a catalytic activity of 170 kg/gZr and the resultant ethylene copolymer had a MI of 0.91 g/10 min., a density of 0.9218 $g/cm^3$, a bulk density of 0.42 $g/cm^3$ and a melting point (MP) of 114.3°C.

Example 28

Preparation of Transition Metal Catalyst Components

A 300 ml three-necked, stirrer equipped flask was in nitrogen atmosphere fed with 100 ml refined toluene, 3.3 grams $Zr(Oi\text{-}Pr)_4$, 2.6 grams cyclopentadiene and 9.8 grams 2-methyl-1-hexene and stirred at room temperature for 30 minutes. The reaction mixture was added slowly with droplets of 13.7 ml triethylaluminum at room temperature over a period of 3 hours and thereafter stirred at room temperature for 2 hours until there was obtained a catalyst component solution.

Contact between Transition Metal Catalyst Components and Methylaluminoxane

A 50 ml flask was fed in nitrogen atmosphere with 2 ml of the above catalyst component solution and 7.5 ml of methylaluminoxane solution and stirred for one hour at room temperature.

Pretreatment of Silica

A 50 ml flask was charged in nitrogen atmosphere with 2 grams $SiO_2$ (Fuji Davison #952, surface area 300 $m^2/g$) that had been calcined at 600°C for 5 hours and 50 ml refined toluene, followed by addition of 3 ml of one mmol/ml methylaluminoxane. The admixture was stirred at room temperature for 2 hours to provide a slurry.

Preparation of Solid Catalyst

The slurry was admixed with all of the remaining catalyst component solution. The solvent was removed by means of a blow of nitrogen in vacuum thereby providing a fluidized solid catalyst.

Polymerization

The procedure of Example 27 was followed whereby there was obtained an ethylene copolymer at a catalytic activity of 126 kg/gZr. The resulting copolymer had MI of 2.3/10 min., a density of 0.9223/cm$^3$ and a bulk density of 0.38 g/cm$^3$ and MP of 114.0°C.

Example 29

Preparation of Transition Metal Catalyst Components

A 300 ml three-necked flask was fed in nitrogen atmosphere with 100 ml refined toluene, 3.8 grams $Zr(On\text{-}Bu)_4$, 7.4 grams 1,3-dimethylcyclopentadiene and 18 grams stilbene and stirred at room temperature for 30 minutes. The reaction mixture was added slowly with droplets of 34.4 ml trihexylaluminum at room temperature over a period of 3 hours and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the catalyst component solution and 14 ml of methylaluminoxane solution and stirred at room temperature for one hour thereby providing a contact reaction product.

Pretreatment of Silica

A 50 ml flask was charged in nitrogen atmosphere with 2 grams $SiO_2$ (Fuji Davison #952, surface area 300 m$^2$/g) that had been calcined at 600°C for 5 hours and 50 ml refined toluene, followed by addition of 3 ml toluene solution of one mmol/ml methylaluminoxane. The admixture was stirred at room temperature for 2 hours to provide a slurry.

Preparation of Solid Catalyst

The slurry was admixed with all of the remaining catalyst component solution, followed by removal of the solvent by nitrogen blow in vacuum.

Polymerization

The procedure of Example 27 was followed whereby there was obtained an ethylene copolymer at a catalytic activity of 164 kg/gZr. The resulting copolymer had MI of 0.06 g/10 min., a density of 0.9211 g/cm$^3$ and a bulk density of 0.43 g/cm$^3$ and MP of 112.3°C.

Example 30

Preparation of Transition Metal Catalyst Components

A 300 ml three-necked flask was fed in nitrogen atmosphere with 100 ml toluene, 2.7 grams $Zr(OEt)_4$, 11.6 grams indene and 11.2 grams cis-2-octene and stirred at room temperature for 30 minutes. The reaction mixture was added slowly with droplets of 27.5 ml trihexylaluminum at room temperature over a period of 3 hours and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the catalyst component solution and 13 ml of 1 mmol/ml methylaluminoxane and stirred at room temperature for onr hour thereby providing a contact reaction product.

Pretreatment of Silica

A 50 ml flask was charged in nitrogen atmosphere with 2 grams $SiO_2$ (Fuji Davison #952, surface area 300 m$^2$/g) that had been calcined at 600°C for 5 hours and 50 ml refined toluene, followed by addition of 0.7 milligram $Zr(On\text{-}Bu)_4$. The admixture was stirred at room temperature for 2 hours to provide a slurry.

Preparation of Solid Catalyst

The slurry was admixed with all of the remaining catalyst component solution, followed by removal of the solvent by nitrogen blow in vacuum.

Polymerization

The procedure of Example 27 was followed whereby there was obtained an ethylene copolymer at a catalytic activity of 150 kg/gZr. The resulting copolymer had MI of 1.2 g/10 min., a density of 0.9212 g/$cm^3$ and a bulk density of 0.45 g/$cm^3$ and MP of 113.8°C.

Example 31

Preparation of Transition Metal Catalyst Components & Solid Catalyst

A 300 ml three-necked flask was fed in nitrogen atmosphere with 100 ml refined toluene, 3.8 grams $Zr(OC_4H_9)_4$, 9.3 grams indene and 0.6 gram cis-2-nonene and stirred at room temperature for 30 minutes. The reaction mixture was added slowly with droplets of 25.3 ml triisobutylaluinum at room temperature over a period of 3 hours and thereafter stirred at room temperature for 2 hours until there was obtained a catalyst component solution.

A 50 ml flask was charged with 2 grams alumina and 10 ml refined toluene and stirred at room temperature for 2 hours, followed by addition of 2 ml of the above catalyst component solution with stirring at room temperature for one hour. 14 ml solution of 1 mmol/ml of methylaluminoxane was added, and the whole was stirred at room temperature for 2 hours, followed by removal of the solvent by nitrogen blow in vacuum thereby providing a fluidized solid catalyst.

Polymerization

The procedure of Example 27 was followed whereby there was obtained an ethylene copolymer at a catalytic activity of 179 kg/gZr. The resulting copolymer had MI of 1.0 g/10 min., a density of 0.9208 g/$cm^3$ and a bulk density of 0.40 g/$cm^3$ and MP of 113.5°C.

Example 32

Preparation of Transition Metal Catalyst Components

A 300 ml three-necked was fed in nitrogen atmosphere with 100 ml refined toluene, 4.6 grams tetrabenzyl zirconium, 11 grams trimethylsilylcyclopentadiene and 18 grams stilbene and stirred at room temperature for 30 minutes. The reaction mixture was added slowly with droplets of 8.2 ml triethylaluminum at room temperature over a period of 2 hours and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the catalyst component solution and 7.5 ml solution of 1 mmol/ml of methylaluminoxane and stirred at room temperature for one hour thereby providing a contact reaction product.

Pretreatment of Silica

A 50 ml flask was charged in nitrogen atmosphere with 2 grams $SiO_2$ (Fuji Davison #952, surface area 300 $m^2$/g) that had been calcined at 600°C for 5 hours and 10 ml refined toluene, followed by addition of 0.75 grams butanol. The admixture was stirred at room temperature for 2 hours followed by nitrogen blow to remove the solvent in vaccum.

The resulting powdery product was admixed with 10 ml toluene and 7.5 ml solution of 1 mmol/ml of methylaluminoxane and then stirred at room temperature for one hour to provide a slurry.

Preparation of Solid Catalyst

The slurry was admixed with all of the remaining catalyst component solution, followed by removal of the solvent by nitrogen blow in vacuum.

Polymerization

The procedure of Example 27 was followed whereby there was obtained an ethylene copolymer at a catalytic activity of 176 kg/gZr. The resulting copolymer had MI of 0.5 g/10 min., a density of 0.9211 g/cm$^3$ and a bulk density of 0.44 g/cm$^3$ and MP of 109.7°C.

Example 33

Preparation of Transition Metal Catalyst Components

A 300 ml three-necked flask was fed in nitrogen atmosphere with 100 ml refined toluene, 3.1 grams $Zi(OiPr)_3Cl$, 10.4 grams methylindene and 11.2 grams cis-2-octene and stirred at room temperature for 30 minutes. The reaction mixture was added slowly with droplets of 7.7 ml trimethylaluminum at room temperature over a period of 3 hours and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the catalyst component solution and 15.5 ml solution of 1 mmol/ml of methylaluminoxane and stirred at room temperature for onr hour thereby providing a contact reaction product.

Pretreatment of Silica-alumina

A 50 ml flask was charged in nitrogen atmosphere with 2 grams silica-alumina that had been calcined at 600°C for 5 hours and 10 ml refined toluene, followed by addition of 3 ml toluene solution of 1 mmol/ml of methylaluminoxane. The admixture was stirred at room temperature for 2 hours to provide a slurry.

Preparation of Solid Catalyst

The slurry was admixed with all of the remaining catalyst component solution, followed by removal of the solvent by nitrogen blow in vacuum.

Polymerization

The procedure of Example 27 was followed whereby there was obtained an ethylene copolymer at a catalytic activity of 136 kg/gZr. The resulting copolymer had MI of 3.1 g/10 min., a density of 0.9236 g/cm$^3$ and a bulk density of 0.41 g/cm$^3$ and MP of 114.6°C.

Example 34

Preparation of Transition Metal Catalyst Components

A 300 ml three-necked flask was fed in nitrogen atmosphere with 100 ml refined toluene, 2.3 grams zirconium chloride, 3.2 grams methylcyclopentadiene and 28 grams cis-2-decene and stirred at room temperature for 30 minutes. The reaction mixture was added slowly with droplets of 25.3 ml triisobutylaluminum at room temperature over a period of 2 hours and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the catalyst component solution and 6.3 ml solution of 1 mmol/ml of methylaluminoxane and stirred at room temperature for one hour thereby providing a contact reaction product.

Pretreatment of Particulate Polyethylene & Preparation of Catalyst

A 100 ml flask was charged in nitrogen atmosphere with 2 grams polyethylene powder which had been vacuum-dried at 80°C for 5 hours (a linear low-density polyethylene having MI of 1.0 g/10 min., a bulk density of 0.41 g/cm$^3$ and a particle size of 500 μm) and 6.3 ml solution of 1 mmol/ml of methylaluminoxane. The admixture was stirred at

room temperature for 2 hours, followed by addition of all of the remaining catalyst component solution and with nitrogen blow to remove the solvent in vacuum thereby obtaining a fluidized solid catalyst.

Polymerization

The procedure of Example 27 was followed whereby there was obtained an ethylene copolymer at a catalytic activity of 161 kg/gZr. The resulting copolymer had MI of 2.5 g/10 min., a density of 0.9226 g/cm$^3$ and a bulk density of 0.33 g/cm$^3$ and MP of 114.3°C.

Example 35

Preparation of Transition Metal Catalyst Components

A 300 ml three-necked flask was fed in nitrogen atmosphere with 100 ml refined toluene, 3.8 grams $Zr(OC_4H_9)_4$, 9.8 grams n-butyl cyclopentadiene and 2.2 grams 1-octene and stirred at room temperature for 30 minutes. The reaction mixture was added slowly with droplets of 10 mols n-BuMgCl at room temperature over a period of one hour and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the catalyst component solution and 15 ml solution of 1 mmol/ml of methylaluminoxane and stirred at room temperature for one hour thereby providing a contact reaction product.

Preparation of Solid Catalyst

A 50 ml flask was charged in nitrogen atmosphere with 2 grams $SiO_2$ (Fuji Davison #952, surface area 300 m$^2$/g) that had been calcined at 600°C for 5 hours and 10 ml refined toluene, followed by addition of all of the remaining catalyst component solution and by removal of the solvent by nitrogen blow in vacuum thereby providing a fluidized solid catalyst.

Polymerization

The procedure of Example 27 was followed whereby there was obtained an ethylene copolymer at a catalytic activity of 129 kg/gZr. The resulting copolymer had MI of 1.3 g/10 min., a density of 0.9222 g/cm$^3$ and a bulk density of 0.41 g/cm$^3$ and MP of 113.9°C.

Example 36

Preparation of Transition Metal Catalyst Components

A 300 ml three-necked, stirrer equipped flask was fed in nitrogen atmosphere with 100 ml refined toluene, 3.4 grams $Ti(OC_4H_9)_4$, 9.3 grams indene and 9.0 grams cis-2-octene and stirred at room temperature for 30 minutes. The reaction mixture was added slowly with droplets of 20 ml triisobutylaluminum at room temperature over a period of one hour and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the catalyst component solution and 14 ml solution of 1 mmol/ml of methylaluminoxane and stirred at room temperature for one hour thereby providing a contact reaction product.

Pretreatment of Solid Catalyst

A 50 ml flask was charged in nitrogen atmosphere with 2 grams $SiO_2$ (Fuji Davison #952, surface area 300 m$^2$/g) that had been calcined at 600°C for 5 hours and 10 ml refined toluene, followed by addition of all of the remaining catalyst component solution and removal of the solvent by nitrogen blow in vacuum thereby providing a fluidized solid catalyst.

Polymerization

The procedure of Example 27 was followed whereby there was obtained an ethylene copolymer at a catalytic activity of 110 kg/gTi. The resulting copolymer had MI of 2.6 g/10 min., a density of 0.9216 g/$cm^3$ and a bulk density of 0.43 g/$cm^3$ and MP of 97°C.

Example 37

Preparation of Transition Metal Catalyst Components

A 300 ml three-necked flask was fed in nitrogen atmosphere with 100 ml refined toluene, 4.1 grams $Hf(OPr)_4$, 9.3 grams indene and 9.0 grams cis-2-octene and stirred at room temperature for 30 minutes. The reaction mixture was added slowly with droplets of 20 ml triisobutylaluminum at room temperature over a period of one hour and thereafter stirred at room temperature for 2 hours until there was obtained a catalyst component solution.

Contact between Transition Metal Catalyst Components and Methylaluminoxane

A 50 cc flask was charged in nitrogen atmosphere with 2 ml of the catalyst component solution and 14 ml solution of 1 mmol/ml of methylaluminoxane and stirred at room temperature for one hour thereby providing a contact reaction product.

Pretreatment of Silica

A 50 ml flask was charged in nitrogen atmosphere with 2 grams $SiO_2$ (Fuji Davison #952, surface area 300 $m^2$/g) that had been calcined at 600°C for 5 hours and 10 ml refined toluene, followed by addition of 3 ml toluene solution of 1 mmol/ml of triisobutylaluminium. The admixture was stirred at room temperature for 2 hours to provide a slurry.

Preparation of Solid Catalyst

The slurry was admixed with all of the remaining catalyst component solution, followed by removal of the solvent by nitrogen blow in vacuum.

Polymerization

The procedure of Example 27 was followed whereby there was obtained an ethylene copolymer at a catalytic activity of 36 kg/gHf. The resulting copolymer had MI of 0.04 g/10 min., a density of 0.9233 g/$cm^3$ and a bulk density of 0.41 g/$cm^3$ and MP of 114.5°C.

Example 38

The procedure of Example 27 was followed for the homopolymerization of ethylene in the presence of the same catalyst except that the autoclave was supplied solely with an ethylene gas. Catalytic activity was 153 kg/gZr. The resulting ethylene polymer had MI of 0.7 g/10 min., a density of 0.9495 g/$cm^3$, a bulk density of 0.43 g/$cm^3$ and MP of 131.5°C.

Example 39

A 3 liter stainless steel autoclave equipped with stirrer was purged with nitrogen, followed by addition of one liter refined toluene and a catalyst containing 0.5 milligram Zr obtained in Example 31. The admixture was heated to 20°C and charged with a propylene gas to a pressure level of 4 kgf/$cm^2$G thereby initiating the polymerization. The reaction was continued for 2 hours with a continuous charge of propylene with a total pressure maintained at 4 kgf/$cm^2$G. Upon completion of the polymerization reaction, excess gases were expelled and the autoclave was cooled, thereby providing 25 grams white colored polymer. Analysis indicated a catalytic activity of 50 kg/g.Zr and a melting point (MP) of 140.0°C.

Comparative Example 2

Preparation of Transition Metal Catalyst Components

A 300 ml three-necked flask was fed in nitrogen atmosphere with 100 ml refined toluene, 3.8 grams $Zr(On\text{-}Bu)_4$, and 9.3 grams indene and stirred at room temperature for 30 minutes. The reaction mixture was added slowly with droplets of 19.8 ml triisobutylaluminum at room temperature over a period of 2 hours and thereafter stirred at room temperature for one hour until there was obtained a catalyst component solution.

Contact between Transition Metal Catalyst Components and Methylaluminoxane

A 50 ml flask was charged in nitrogen atmosphere with 2 ml of the above catalyst component solution and 14 ml solution of 1 mmol/ml of methylaluminoxane and shaken at room temperature for one hour thereby providing a contact reaction product.

Pretreatment of Solid Catalyst

A 50 ml flask was charged in nitrogen atmosphere with 2 grams $SiO_2$ (Fuji Davison #952, surface area 300 $m^2/g$) that had been calcined at 600°C for 5 hours and 10 ml refined toluene, followed by addition of all of the remaining catalyst component solution, followed by removal of the solvent by nitrogen blow in vacuum thereby providing a fluidized solid catalyst.

Polymerization

The procedure of Example 27 was followed whereby there was obtained an ethylene copolymer at a catalytic activity of 111 kg/gZr. The resulting copolymer had MI of 1.5 g/10 min., a density of 0.9224/$cm^3$ and a bulk density of 0.41 g/$cm^3$ and MP of 114.8°C.

Example 40

Preparation of Transition Metal Catalyst Components

A 300 ml three-necked flask was fed in nitrogen atmosphere with 100 ml refined toluene, 3.8 grams $Zr(On\text{-}Bu)_4$, 7.4 grams 1,3-dimethylcyclopentadiene and 8.4 grams 2,3-dimethylbutene-2 and stirred at room temperature for 30 minutes. The reaction mixture was added slowly with droplets of 19.8 ml triisobutylaluminum at room temperature over a period of 2 hours and thereafter stirred at room temperature for one hour until there was obtained a catalyst component solution.

Contact between Transition Metal Catalyst Components and Methylaluminoxane

A 50 ml flask was charged in nitrogen atmosphere with 2 ml of the catalyst component solution and 14 ml solution of 1 mmol/ml of methylaluminoxane and shaken at room temperature for one hour thereby providing a contact reaction product.

Pretreatment of Solid Catalyst

A 50 ml flask was charged in nitrogen atmosphere with 2 grams $SiO_2$ (Fuji Davison #952, surface area 300 $m^2/g$) that had been calcined at 600°C for 5 hours and 10 ml refined toluene, followed by addition of all of the remaining catalyst component solution, followed by removal of the solvent by nitrogen blow in vacuum thereby providing a fluidized solid catalyst.

Polymerization

A reaction loop was formed with a stirrer fitted stainless steel autoclave, a blower, a flow controller and a dry cyclon. The temperature of the autoclave was regulated with a flow of warm water through its jacket. The polymerization reaction was carried out via the above loop for 8 hours, in which the solid catalyst was taken at a rate of 100 mg/hr and toluene solution of triethylaluminum (0.01 mmol/ml) at a rate of 2 ml/hr into the autoclave held at 60°C, followed by supply of a mixed gas of butene-1 and ethylene at a molar ratio of 0.25 in the gaseous phase to maintain a total

system pressure at 8 $kgf/cm^2$. The resulting polymer after 8 hours of reaction was withdrawn intermittently while the gas in the system was being circulated. Analysis indicated a catalytic activity of 230 kg/gZr and the resultant ethylene copolymer had a MI of 0.91 g/10 min., a density of 0.9218 $g/cm^3$, a bulk density of 0.42 $g/cm^3$ and a melting point (MP) of 113.9°C.

Example 41

Preparation of Transition Metal Catalyst Components

A 300 ml three-necked flask was fed in nitrogen atmosphere with 100 ml refined toluene, 3.8 grams $Zr(On\text{-}Bu)_4$, 9.3 grams indene and 9 grams cis-2-octene and stirred at room temperature for 30 minutes. The reaction mixture was added slowly with droplets of 19.8 ml triisobutylaluinum at room temperature over a period of 2 hours and thereafter stirred at room temperature for one hour until there was obtained a catalyst component solution.

Pretreatment of Solid Catalyst

A 50 ml flask was charged in nitrogen atmosphere with 2 grams $SiO_2$ (Fuji Davison #952, surface area 300 $m^2/g$) that had been calcined at 600°C for 5 hours and 10 ml refined toluene, followed by addition of 2 ml of the above component solution and removal of the solvent by nitrogen blow in vacuum thereby providing a fluidized solid catalyst.

Polymerization

A 3 liter stainless steel autoclave equipped with stirrer was purged with nitrogen, followed by addition of 200 grams ocean sand, a portion of the above catalyst component solution containing 1 milligram Zr and 1 ml solution of 1 mmol/ml methylaluminoxane. The admixture was heated to 75°C and charged with a mixed gas (butene-1/ethylene mol ratio 0.25) to a pressure level of 9 $kgf/cm^2G$ thereby initiating the polymerization. The reaction was continued for one hour with a continuous charge of a mixed gas (butene-1/ethylene mol ratio 0.05) with a total pressure maintained at 9 $kgf/cm^2G$. Upon completion of the polymerization reaction, excess gases were expelled and the autoclave was cooled, followed by removal of the sand thereby providing 180 grams white colored polymer. Analysis indicated a catalytic activity of 180 kg/gZr, MI of 1.5 g/10 min., a density of 0.9219 $g/cm^3$, a bulk density of 0.41 $g/cm^3$ and MP of 114.0°C.

Example 42

A 300 ml three-necked flask was charged in nitrogen atmosphere with 100 ml refined toluene, 10 grams $SiO_2$ (Fuji Davison #952, surface area 300 $m^2/g$) that had been calcined at 600°C for 5 hours, 0.38 gram $Zr(On\text{-}Bu)_4$, 0.9 gram indene and one gram cis-2-octene and stirred at room temperature for 30 minutes. The reaction mixture was added slowly with droplets of 2 ml triisobutylaluminum at room temperature over a period of 30 minutes and thereafter stirred at room temperature for one hour until there was obtained a slurry reaction solution.

A 50 ml flask was fed in nitrogen atmosphere with 10 ml of this slurry solution and 10 ml solution of 1 mmol/ml of methylaluminoxane and stirred for one hour at room temperature, followed by removal of the solvent by nitrogen blow in vacuum thereby providing a fluidized solid catalyst.

The procedure of Example 27 was followed whereby there was obtained an ethylene copolymer at a catalytic activity of 140 kg/gZr. The resulting copolymer had MI of 1.2 g/10 min., a density of 0.9218/$cm^3$ and a bulk density of 0.40 $g/cm^3$ and MP of 114.1°C.

Example 43

Preparation of Transition Metal Catalyst Components

A 300 ml three-necked flask was fed in nitrogen atmosphere with 100 ml refined toluene, 3.8 grams $Zr(On\text{-}Bu)_4$, 9.3 grams indene and 5 grams 4-octyne and stirred at room temperature for 30 minutes. The reaction mixture was added slowly with droplets of 19.8 ml triisobutylaluminum at room temperature over a period of 2 hours and thereafter stirred at room temperature for one hour until there was obtained a catalyst component solution.

Contact between Transition Metal Catalyst Components and Methylaluminoxane

A 50 ml flask was charged in nitrogen atmosphere with 1 ml of the above catalyst component solution and 14 ml solution of 1 mmol/ml of methylaluminoxane and shaken at room temperature for one hour.

Pretreatment of Solid Catalyst

A 50 ml flask was charged in nitrogen atmosphere with 2 grams $SiO_2$ (Fuji Davison #952, surface area 300 $m^2/g$) that had been calcined at 600°C for 5 hours and 10 ml refined toluene, followed by addition of all of the catalyst component solution and removal of the solvent by nitrogen blow in vacuum thereby providing a fluidized solid catalyst.

Polymerization

A reaction loop was formed with a stirrer fitted stainless steel autoclave, a blower, a flow controller and a dry cyclon. The temperature of the autoclave was regulated with a flow of warm water through its jacket. The polymerization reaction was carried out via the above loop for 8 hours, in which the solid catalyst was taken at a rate of 100 mg/hr into the autoclave held at 60°C, followed by supply of a mixed gas of butene-1 and ethylene at a molar ratio of 0.20 in the gaseous phase to maintain a total system pressure at 8 $kgf/cm^2$. The resulting polymer was withdrawn intermittently while the gas in the system was being circulated. Analysis indicated a catalytic activity of 185 kg/gZr and the resultant ethylene copolymer had a MI of 2.3 g/10 min., a density of 0.9207 $g/cm^3$, a bulk density of 0.42 $g/cm^3$ and a melting point (MP) of 114.1°C.

Example 44

Preparation of Transition Metal Catalyst Components

A 300 ml three-necked flask was charged in nitrogen atmosphere with 100 ml refined toluene, 3.3 grams $Zr(Oi-Pr)_4$, 2.6 grams cyclopentadiene and 8 grams 1-hexyne and stirred at room temperature for 30 minutes. The reaction mixture was added slowly with droplets of 13.7 ml triethylaluminum at room temperature over a period of 3 hours and thereafter stirred at room temperature for 2 hours until there was obtained a catalyst component solution.

Contact between Transition Metal Catalyst Components and Methylaluminoxane

A 50 ml flask was fed with 2 ml of the above catalyst component solution and 7.5 ml solution of 1 mmol/ml of methylaluminoxane and stirred for one hour at room temperature.

Pretreatment of Silica

A 50 ml flask was charged in nitrogen atmosphere with 2 grams $SiO_2$ (Fuji Davison #952, surface area 300 $m^2/g$) that had been calcined at 600°C for 5 hours and 50 ml refined toluene, followed by addition of 3 ml solution of 1 mmol/ml of methylaluminoxane. The admixture was stirred at room temperature for 2 hours to provide a slurry.

Preparation of Solid Catalyst

The slurry was admixed with all of the remaining catalyst component solution, followed by removal of the solvent by nitrogen blow in vacuum thereby providing a fluidized solid catalyst.

Polymerization

The procedure of Example 43 was followed whereby there was obtained an ethylene copolymer at a catalytic activity of 134 kg/gZr. The resulting copolymer had MI of 3.2 g/10 min., a density of 0.9223/$cm^3$ and a bulk density of 0.39 $g/cm^3$ and MP of 115.1°C.

Example 45

Preparation of Catalyst Components

A 300 ml three-necked flask was charged in nitrogen atmosphere with 100 ml refined toluene, 3.8 grams $Zr(On-Bu)_4$, 7.4 grams 1,3-dimethylcyclopentadiene and 10 grams diphenyl acetylene and stirred at room temperature for 30 minutes. The reaction mixture was added slowly with droplets of 34.4 ml trihexylaluminum at room temperature over a period of 3 hours and thereafter stirred at room temperature for 2 hours until there was obtained a catalyst component solution.

Contact between Transition Metal Catalyst Components and Methylaluminoxane

A 50 ml flask was fed with 2 ml of the above catalyst component solution and 14 ml solution of 1 mmol/ml of methylaluminoxane and stirred for one hour at room temperature.

Pretreatment of Silica

A 50 ml flask was charged in nitrogen atmosphere with 2 grams $SiO_2$ (Fuji Davison #952, surface area 300 $m^2/g$) that had been calcined at 600°C for 5 hours and 50 ml refined toluene, followed by addition of 3 ml toluene solution of 1 mmol/ml of triethylaluminoxane. The admixture was stirred at room temperature for 2 hours to provide a slurry.

Preparation of Solid Catalyst

The slurry was admixed with all of the catalyst component solution, followed by removal of the solvent by nitrogen blow in vacuum thereby providing a fluidized solid catalyst.

Polymerization

The procedure of Example 43 was followed whereby there was obtained an ethylene copolymer at a catalytic activity of 172 kg/gZr. The resulting copolymer had MI of 0.03 g/10 min., a density of 0.9197/$cm^3$ and a bulk density of 0.42 g/$cm^3$ and MP of 111.5°C.

Example 46

Preparation of Transition Metal Catalyst Components

A 300 ml three-necked flask was charged in nitrogen atmosphere with 100 ml refined toluene, 2.7 grams $Zr(OEt)_4$, 11.6 grams indene and 10 grams phenylacetylene and stirred at room temperature for 30 minutes. The reaction mixture was added slowly with droplets of 27.5 ml trihexylaluminum at room temperature over a period of 3 hours and thereafter stirred at room temperature for 2 hours until there was obtained a catalyst component solution.

Contact between Transition Metal Catalyst Components and Methylaluminoxane

A 50 ml flask was fed in nitrogen atmosphere with 2 ml of the above catalyst component solution and 13 ml solution of of 1 mmol/ml of methylaluminoxane and stirred for one hour at room temperature.

Pretreatment of Silica

A 50 ml flask was charged in nitrogen atmosphere with 2 grams $SiO_2$ (Fuji Davison #952, surface area 300 $m^2/g$) that had been calcined at 600°C for 5 hours and 50 ml refined toluene, followed by addition of 0.7 milligram $Zr(On\text{-}Bu)_4$. The admixture was stirred at room temperature for 2 hours to provide a slurry.

Preparation of Solid Catalyst

The slurry was admixed with all of the catalyst component solution, followed by removal of the solvent by nitrogen blow in vacuum thereby providing a fluidized solid catalyst.

Polymerization

The procedure of Example 43 was followed whereby there was obtained an ethylene copolymer at a catalytic activity of 135 kg/gZr. The resulting copolymer had MI of 2.2 g/10 min., a density of 0.9230/$cm^3$ and a bulk density of 0.45 g/$cm^3$ and MP of 114.8°C.

Example 47

Preparation of Transition Metal Catalyst Components & Solid Catalyst

A 300 ml three-necked flask was fed in nitrogen atmosphere with 100 ml refined toluene, 3.8 grams $Zr(OC_4H_9)_4$,

9.3 grams indene and 5 grams 1-phenylhexyne and stirred at room temperature for 30 minutes. The reaction mixture was added slowly with droplets of 25.3 ml triisobutylaluinum at room temperature over a period of 3 hours and thereafter stirred at room temperature for 2 hours until there was obtained a catalyst component solution.

A 50 ml flask was charged in nitrogen atmosphere with 2 grams alumina and 10 ml refined toluene and stirred at room temperature for 2 hours, followed by addition of 2 ml of the above catalyst component solution with stirring at room temperature for one hour. 14 ml solution of 1 mmol/ml of methylaluminoxane was added, and the whole was stirred at room temperature for 2 hours, followed by removal of the solvent by nitrogen blow in vacuum thereby providing a fluidized solid catalyst.

Polymerization

The procedure of Example 43 was followed whereby there was obtained an ethylene copolymer at a catalytic activity of 179 kg/gZr. The resulting copolymer had MI of 1.9 g/10 min., a density of 0.9212 g/cm$^3$ and a bulk density of 0.41 g/cm$^3$ and MP of 113.9°C.

Example 48

Preparation of Transition Metal Catalyst Components

A 300 ml three-necked flask was fed in nitrogen atmosphere with 100 ml refined toluene, 4.6 grams tetrabenzylzirconium, 11 grams trimethylsilyl cyclopentadiene and 10 grams diphenylacetylene stirred at room temperature for 30 minutes. The reaction mixture was added slowly with droplets of 8.2 ml 5 triethylaluinum at room temperature over a period of 2 hours and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the above catalyst component solution and 7.5 ml solution of 1 mmol/ml of methylaluminoxane and shaken at room temperature for one hour.

Pretreatment of Silica

A 50 ml flask was charged in nitrogen atmosphere with 2 grams $SiO_2$ (Fuji Davison #952, surface area 300 m$^2$/g) that had been calcined at 600°C for 5 hours and 10 ml refined toluene, followed by addition of 0.75 grams butanol. The admixture was stirred at room temperature for 2 hours followed by nitrogen blow to remove the solvent in vaccum.

The resulting powdery product was admixed with 10 ml toluene and 7.5 ml solution of 1 mmol/ml of methylaluminoxane and then stirred at room temperature for one hour to provide a slurry.

Preparation of Solid Catalyst

The above slurry was added with all of the catalyst component solution, followed by removal of the solvent to provide a fluidized or particulate solid catalyst.

Polymerization

The procedure of Example 43 was followed whereby there was obtained an ethylene copolymer at a catalytic activity of 179 kg/gZr. The resulting copolymer had MI of 0.05 g/10 min., a density of 0.9232 g/cm$^3$ and a bulk density of 0.44 g/cm$^3$ and MP of 112.7°C.

Example 49

Preparation of Transition Metal Catalyst Components

A 300 ml three-necked flask was fed in nitrogen atmosphere with 100 ml refined toluene, 3.1 grams $Zr(OiPr)_3Cl$, 10.4 grams methylindene and 10 grams 2-octyne and stirred at room temperature for 30 minutes. The reaction mixture was added slowly with droplets of 7.7 ml trimethylaluminum at room temperature over a period of 3 hours and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the above catalyst component solution and 15.5 ml solution of 1 mmol/ml of methylaluminoxane and stirred at room temperature for one hour.

Pretreatment of Silica

A 50 ml flask was charged in nitrogen atmosphere with 2 grams $SiO_2$ (Fuji Davison #952, surface area 300 $m^2/g$) that had been calcined at 600°C for 5 hours and 10 5 ml refined toluene, followed by addition of 3 ml solution of 1 mmol/ml of methylaluminoxane. This admixture was stirred at room temperature for 2 hours.

Preparation of Solid Catalyst

The slurry was admixed with all of the remaining catalyst component solution, followed by removal of the solvent by nitrogen blow in vacuum.

Polymerization

The procedure of Example 43 was followed whereby there was obtained an ethylene copolymer at a catalytic activity of 142 kg/gZr. The resulting copolymer had MI of 1.0 g/10 min., a density of 0.9232 $g/cm^3$ and a bulk density of 0.43 $g/cm^3$ and MP of 115.0°C.

Example 50

Preparation of Transition Metal Catalyst Components

A 300 cc three-necked flask was fed in nitrogen atmosphere with 100 ml refined toluene, 2.3 grams zirconiumchloride 3.2 grams methylcyclopentadiene and 28 grams 4-decyne and stirred at room temperature for 30 minutes. The reaction mixture was added slowly with droplets of 25.3 ml triisobutylaluminum at room temperature over a period of 2 hours and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the above catalyst component solution and 6.3 ml solution of 1 mmol/ml of methylaluminoxane and stirred at room temperature for one hour.

Pretreatment of Particulate Polyethylene & Preparation of Catalyst

A 100 ml flask was charged in nitrogen atmosphere with 2 grams polyethylene powder which had been vacuum-dried at 80°C for 5 hours (a linear low-density polyethylene having MI of 1.0 g/10 min., a bulk density of 0.41 $g/cm^3$ and a particle size of 500 μm) and 6.3 ml solution of 1 mmol/mlof methylaluminoxane. The admixture was stirred at room temperature for 2 hours, followed by addition of all of the catalyst component solution and with nitrogen blow to remove the solvent in vacuum thereby obtaining a fluidized solid catalyst.

Polymerization

The procedure of Example 43 was followed whereby there was obtained an ethylene copolymer at a catalytic activity of 142 kg/gZr. The resulting copolymer had MI of 5.1 g/10 min., a density of 0.9216 $g/cm^3$ and a bulk density of 0.37 $g/cm^3$ and MP of 114.3°C.

Example 51

Preparation of Transition Metal Catalyst Components

A 300 cc three-necked flask was fed in nitrogen atmosphere with 100 ml refined toluene, 3.8 grams $Zr(OC_4H_9)_4$, 9.8 grams n-butylcyclopentadiene and 6 grams 1-octyne and stirred at room temperature for 30 minutes. The reaction mixture was added slowly with droplets of 10 mols n-BuMgCl at room temperature over a period of one hour and thereafter stirred at room temperature for 2 hours until there was obtained a catalyst component solution.

Contact between Transition Metal Catalyst Components and Methylaluminoxane

A 50 ml flask was charged in nitrogen atmosphere with 2 ml of the catalyst component solution and 15 ml solution of 1 mmol/ml of methylaluminoxane and stirred at room temperature for one hour.

Pretreatment of Solid Catalyst

A 50 ml flask was charged in nitrogen atmosphere with 2 grams $SiO_2$ (Fuji Davison #952, surface area 300 $m^2/g$) that had been calcined at 600°C for 5 hours and 10 ml refined toluene, followed by addition of all of the catalyst component solution, followed by nitrogen blow to remove the solvent in vaccum thereby providing a fluidized solid catalyst.

Polymerization

The procedure of Example 43 was followed whereby there was obtained an ethylene copolymer at a catalytic activity of 146 kg/gZr. The resulting copolymer had MI of 3.3 g/10 min., a density of 0.9206 $g/cm^3$ and a bulk density of 0.41 $g/cm^3$ and MP of 114.1°C.

Example 52

Preparation of Transition Metal Catalyst Components

A 300 cc three-necked flask was charged in nitrogen atmosphere with 100 ml refined toluene, 3.4 grams Ti $(OC_4H_9)_4$, 9.3 grams indene and 9.0 grams 4-octyne and stirred at room temperature for 30 minutes. The reaction mixture was added slowly with droplets of 20 ml triisobutylaluminum at room temperature over a period of two hours and thereafter stirred at room temperature for one hour until there was obtained a catalyst component solution.

Contact between Transition Metal Catalyst Components and Methylaluminoxane

A 50 ml flask was fed with 2 ml of the above catalyst component solution and 14 ml solution of 1 mmol/ml of methylaluminoxane and stirred for one hour at room temperature.

Preparation of Solid Catalyst

A 50 ml flask was charged with in nitrogen atmosphere 2 grams $SiO_2$ (Fuji Davison #952, surface area 300 $m^2/g$) that had been calcined at 600°C for 5 hours and 10 ml refined toluene, followed by addition of all of the catalyst component solution. The solvent was removed by means of a blow of nitrogen in vacuum thereby providing a fluidized solid catalyst.

Polymerization

The procedure of Example 43 was followed whereby there was obtained an ethylene copolymer at a catalytic activity of 68 kg/gTi. The resulting copolymer had MI of 4.7 g/10 min., a density of 0.9232/$cm^3$ and a bulk density of 0.43 $g/cm^3$ and MP of 101.3°C.

Example 53

Preparation of Transition Metal Catalyst Components

A 300 cc three-necked, stirrer equipped flask was charged in nitrogen atmosphere with 100 ml refined toluene, 4.1 grams $Hf(OPr)_4$, 9.3 grams indene and 9.0 grams 4-octyne and stirred at room temperature for 30 minutes. The reaction mixture was added slowly with droplets of 20 ml triisobutylaluminum at room temperature over a period of one hour and thereafter stirred at room temperature for 2 hours until there was obtained a catalyst component solution.

Contact between Transition Metal Catalyst Components and Methylaluminoxane

A 50 ml flask was fed in nitrogen atmosphere with 2 ml of the above catalyst component solution and 14 ml solution of 1 mmol/ml of methylaluminoxane and stirred for one hour at room temperature.

Pretreatment of Silica

A 50 ml flask was charged in nitrogen atmosphere with 2 grams $SiO_2$ (Fuji Davison #952, surface area 300 $m^2/g$) that had been calcined at 600°C for 5 hours and 10 ml refined toluene, followed by addition of 3 ml toluene solution of 1 mmol/ml of methylaluminoxane. The admixture was stirred at room temperature for 2 hours to provide a slurry.

Preparation of Solid Catalyst

The slurry was added with all of the catalyst component solution, followed by a blow of nitrogen to remove the solvent in vacuum thereby providing a fluidized solid catalyst.

Polymerization

The procedure of Example 43 was followed whereby there was obtained an ethylene copolymer at a catalytic activity of 18 kg/gHf. The resulting copolymer had MI of 0.01 g/10 min., a density of 0.9245/$cm^3$ and a bulk density of 0.41 g/$cm^3$ and MP of 115.6°C.

Example 54

The procedure of Example 43 was followed for the homopolymerization of ethylene in the presence of the same catalyst except that the gas fed to the autoclave was ethylene alone. Catalytic activity was 134 kg/gZr. The resulting ethylene polymer had MI of 1.2 g/10 min., a density of 0.9498/$cm^3$, a bulk density of 0.40 g/$cm^3$ and MP of 131.4°C.

Example 55

A 3 liter stainless steel autoclave equipped with stirrer was purged with nitrogen, followed by addition of one liter refined toluene and a catalyst of Example 31 containing 0.5 milligram Zr. The admixture was heated to 20°C and charged with propylene to a pressure level of 4 kgf/$cm^2$G thereby initiating the polymerization. The reaction was continued for 2 hours with a continuous charge of propylene with a total pressure maintained at 4 kgf/$cm^2$G. Upon completion of the polymerization reaction, excess gases were expelled and the autoclave was cooled. Analysis of the resulting 25 grams white polymer indicated a catalytic activity of 39 kg/gZr and MP of 140.1°C.

Example 56

Preparation of Transition Metal Catalyst Components

A 300 cc three-necked flask was charged in nitrogen atmosphere with 100 ml refined toluene, 3.8 grams $Zr(On\text{-}Bu)_4$, 7.4 grams 1,3-dimethylcyclopentadiene and 8.4 grams phenylacetylene and stirred at room temperature for 30 minutes. The reaction mixture was added slowly with droplets of 19.8 ml triisobutylaluminum at room temperature over a period of 2 hours and thereafter stirred at room temperature for one hour until there was obtained a catalyst component solution.

Contact between Transition Metal Catalyst Components and Methylaluminoxane

A 50 ml flask was fed in nitrogen atmosphere with 2 ml of the above catalyst component solution and 14 ml solution of 1 mmol/ml of methylaluminoxane and stirred for one hour at room temperature.

Preparation of Solid Catalyst

A 50 ml flask was charged in nitrogen atmosphere with 2 grams $SiO_2$ (Fuji Davison #952, surface area 300 $m^2/g$) that had been calcined at 600°C for 5 hours and 10 ml refined toluene, followed by addition of all of the catalyst component solution. The solvent was removed by means of a blow of nitrogen in vacuum thereby providing a fluidized solid catalyst.

Polymerization

A reaction loop was formed with a stirrer fitted stainless steel autoclave, a blower, a flow controller and a dry cyclon. The temperature of the autoclave was regulated with a flow of warm water through its jacket. The polymerization

reaction was carried out via the above loop for 8 hours, in which the solid catalyst was taken at a rate of 100 mg/hr and toluene solution of triethylaluminum (0.01 mmol/ml) at a rate of 2 ml/hr into the autoclave held at 60°C, followed by supply of a mixed gas of butene-1 and ethylene at a molar ratio of 0.25 in the gaseous phase to maintain a total system pressure at 8 kgf/cm$^2$. The resulting polymer was withdrawn intermittently while the gas in the system was being circulated. Analysis indicated a catalytic activity of 230 kg/gZr and the resultant ethylene copolymer had a MI of 1.2 g/10 min., a density of 0.9216 g/cm3, a bulk density of 0.42 g/cm$^3$ and MP of 114.3°C.

Example 57

Preparation of Transition Metal Catalyst Components

A 300 cc three-necked flask was in nitrogen atmosphere fed with 100 ml refined toluene, 3.8 grams $Zr(On\text{-}Bu)_4$, 9.3 grams indene and 8 grams diphenylacetylene and stirred at room temperature for 30 minutes. The reaction mixture was added slowly with droplets of 19.8 ml triisobutylaluminum at room temperature over a period of 2 hours and thereafter stirred at room temperature for one hour until there was obtained a catalyst component solution.

Preparation of Solid Catalyst

A 50 ml flask was charged in nitrogen atmosphere with 2 grams $SiO_2$ (Fuji Davison #952, surface area 300 m$^2$/g) that had been calcined at 600°C for 5 hours and 10 ml refined toluene, followed by addition of 2 ml of the above component solution, followed by a nitrogen blow to remove the solvent thereby providing a fluidized solid catalyst.

Polymerization

A 3 liter stainless steel autoclave equipped with stirrer was purged with nitrogen, followed by addition of 200 grams ocean sand, a portion of the above catalyst component solution containing 1 milligram Zr and lml solution of 1 mmol/ml of methylaluminoxane. The admixture was stirred and heated to 75°C and charged with a mixed gas (butene-1/ethylene mol ratio 0.20) to a pressure level of 9 kgf/cm$^2$G thereby initiating the polymerization. The reaction was continued for one hour with a continuous charge of a mixed gas 5 (butene-1/ethylene mol ratio 0.05) with a total pressure maintained at 9 kgf/cm$^2$G. Upon completion of the polymerization reaction, excess gases were expelled and the autoclave was cooled, followed by removal of the sand. Analysis of the resulting ethylene copolymer indicated a catalytic activity of 175 kg/gZr, MI of 3.1 g/10 min., a density of 0.9215 g/cm$^3$, a bulk density of 0.42 g/cm$^3$ and MP of 115.1°C.

Example 58

A 300 cc three-necked flask was charged in nitrogen atmosphere with 100 milliliters refined toluene, followed by addition in nitrogen atmosphere of 10 grams $SiO_2$ (Fuji Davison #952, surface area 300 m$^2$/g) that had been calcined at 600°C for 5 hours, 0.38 grams $Zr(On\text{-}Bu)_4$, 0.9 gram indene and one gram 4-octyne, and stirred at room temperature for 30 minutes. The admixture was added slowly with droplets of 2 ml triisobutylaluminum over a period of 30 minutes. The resulting slurry was stirred at room temperature for one hour. A 50 ml flask was fed with 10 ml of this slurry in nitrogen atmosphere and 10 ml solution of 1 mmol/ml of methylaluminoxane, followed by stirring at room temperature for one hour. A blow of nitrogen was applied to remove the solvent in vacuum thereby providing a fluidized solid catalyst. The procedure of Example 43 was followed for polymerization with use of the above catalyst Catalytic activity was 137 kg/gZr. The resulting ethylene copolymer had MI of 1.3 g/10 min., a density of 0.9215 g/cm$^3$, a bulk density of 0.41 g/cm$^3$ and MP of 114.3°C.

**Claims**

**1.** A catalyst composition resulting from mutual contact of:

a compound (A) of the formula

$$Me^1R^1_p(OR^2)_qX^1_{4-p-q} \qquad I$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \leq p \leq 4$, $0 \leq q \leq 4$ and $0 \leq p+q \leq 4$;
a compound (B) of the formula

$$Me^2R^3_m(OR^4)_nX^2_{z-m-n} \qquad II$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \leq m \leq z$, $0 \leq n \leq z$ and $0 < m+n \leq z$;
a cyclic compound (C) having two or more conjugated double-bonds; and
a compound (D) of the formula

$$R^5R^6C = CR^7R^8 \qquad III$$

and/or

$$R^9C \equiv CR^{10} \qquad IV$$

wherein $R^5$ through $R^{10}$ each are hydrogen or a $C_1$ - $C_{24}$ hydrocarbon group.

**2.** A catalyst composition resulting from mutual contact of:

a compound (A) of the formula

$$Me^1R^1_p(OR^2)_qX^1_{4-p-q} \qquad I$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \leq p \leq 4$, $0 \leq q \leq 4$ and $0 \leq p+q \leq 4$;
a compound (B) of the formula

$$Me^2R^3_m(OR^4)_nX^2_{z-m-n} \qquad II$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \leq m \leq z$, $0 \leq n \leq z$ and $0 < m+n \leq z$;
a cyclic compound (C) having two or more conjugated double-bonds;
a compound (D) of the formula

$$R^5R^6C = CR^7R^8 \qquad III$$

and/or

$$R^9C \equiv CR^{10} \qquad IV$$

wherein $R^5$ through $R^{10}$ each are hydrogen or a $C_1$ - $C_{24}$ hydrocarbon group; and
a modified organoaluminum compound (E) having Al-O-Al bonds derived from the reaction of an organoaluminum compound with water, said organoaluminum compound being of the formula

$$R^{17}_cAlX^7_{3-c}$$

wherein $R^{17}$ is a hydrocarbon group such as an alkyl, alkenyl, aryl and aralkyl group of 1 to 18 carbon atoms, $X^7$ is a halogen or hydrogen atom, and c is an integer of $1 \le c \le 3$.

**3.** A catalyst composition resulting from mutual contact of:

a compound (A) of the formula

$$Me^1R^1_p(OR^2)_qX^1_{4-p-q} \qquad I$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \le p \le 4$, $0 \le q \le 4$ and $0 \le p+q \le 4$;
a compound (B) of the formula

$$Me^2R^3_m(OR^4)_nX^2_{z-m-n} \qquad II$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \le m \le z$, $0 \le n \le z$ and $0 < m+n \le z$;
a cyclic compound (C) having two or more conjugated double-bonds;
a compound (D) of the formula

$$R^5R^6C = CR^7R^8 \qquad III$$

and/or

$$R^9C \equiv CR^{10} \qquad IV$$

wherein $R^5$ through $R^{10}$ each are hydrogen or a $C_1$ - $C_{24}$ hydrocarbon group;
a modified organoaluminum compound (E) having Al-O-Al bonds derived from the reaction of an organoaluminum compound with water, said organoaluminum compound being of the formula

$$R^{17}_cAlX^7_{3-c}$$

wherein $R^{17}$ is a hydrocarbon group such as an alkyl, alkenyl, aryl and aralkyl group of 1 to 18 carbon atoms, $X^7$ is a halogen or hydrogen atom, and c is an integer of $1 \le c \le 3$; and
an inorganic and/or particulate polymer carrier (F), said inorganic carrier being formed from a porous inorganic compound of the group consisting of a carbonaceous material, metal, metal oxide, metal chloride, metal carbonate and mixtures thereof, and having a maximum length of 5 - 200 µm, a surface area of 50 - 1,000 $m^2/g$ and a pore volume of 0.05 - 3 $cm^3/g$, and said particulate polymer carrier being formed from a thermoplastic or thermosetting resin having an average particle size of 5 - 2,000 µm.

**4.** A catalyst composition according to claim 1 wherein said cyclic compound (C) is represented by the formula

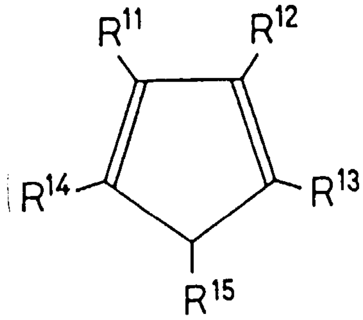

...... V

where $R^{11}$ through $R^{15}$ each are hydrogen or a $C_1$ - $C_{10}$ hydrocarbon group, any two of these hydrocarbon groups jointly forming a conjugated double-bond-containing ring.

**5.** A catalyst composition according to claim 1 wherein each of said compounds (B) and (C) is used in an amount of from 0.01 to 1,000 mols per mol of said compound (A).

**6.** A catalyst composition according to claim 1 wherein said compound (D) is used in an amount of from 0.01 to 100 mols per mol of said compound (A).

**7.** A catalyst composition according to claim 1 wherein said compound (E) is used in an amount of from 0.1 to 100,000 by the atomic ratio of aluminum in said compound (E) to transition metal $Me^1$ in said compound (A).

**8.** A catalyst composition according to claim 1 wherein said compound (F) is used in an amount of 1 gram per 0.0001 - 5 millimols of said compound (A).

**9.** A process for the production of olefinic polymers in the presence of a catalyst composition resulting from mutual contact of:

a compound (A) of the formula

$$Me^1R^1_p(OR^2)_qX^1_{4-p-q} \qquad I$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \le p \le 4$, $0 \le q \le 4$ and $0 \le p+q \le 4$;
a compound (B) of the formula

$$Me^2R^3_m(OR^4)_nX^2_{z-m-n} \qquad II$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \le m \le z$, $0 \le n \le z$ and $0 < m+n \le z$;
a cyclic compound (C) having two or more conjugated double-bonds;
a compound (D) of the formula

$$R^5R^6C = CR^7R^8 \qquad III$$

and/or

$$R^9C \equiv CR^{10} \qquad IV$$

wherein $R^5$ through $R^{10}$ each are hydrogen or a $C_1$ - $C_{24}$ hydrocarbon group; and
a modified organoaluminum compound (E) having Al-O-Al bonds derived from the reaction of an organoaluminum compound with water, said organoaluminum compound being of the formula

$$R^{17}{}_cAlX^7{}_{3-c}$$

wherein $R^{17}$ is a hydrocarbon groups such as an alkyl, alkenyl, aryl and aralkyl group of 1 to 18 carbon atoms, $X^7$ is a halogen or hydrogen atom, and c is an integer of $1 \leq c \leq 3$.

**10.** A process for the production of olefinic polymers in the presence of a catalyst composition resulting from mutual contact of:

a compound (A) of the formula

$$Me^1R^1{}_p(OR^2)_qX^1{}_{4-p-q} \qquad I$$

wherein $R^1$ and $R^2$ each are a $C_1$ - $C_{24}$ hydrocarbon group, $X^1$ is a hydrogen or halogen atom, $Me^1$ is titanium, zirconium or hafnium, p and q are $0 \leq p \leq 4$, $0 \leq q \leq 4$ and $0 \leq p+q \leq 4$;
a compound (B) of the formula

$$Me^2R^3{}_m(OR^4)_nX^2{}_{z-m-n} \qquad II$$

wherein $R^3$ and $R^4$ each are a $C_1$ - $C_{24}$ hydrocarbon group, $X^2$ is a hydrogen or halogen atom, $Me^2$ is an element of Groups I - III in the Periodic Table, z is a valence of $Me^2$, and m and n are $0 \leq m \leq z$, $0 \leq n \leq z$ and $0 < m+n \leq z$;
a cyclic compound (C) having two or more conjugated double-bonds;
a compound (D) of the formula

$$R^5R^6C = CR^7R^8 \qquad III$$

and/or

$$R^9C \equiv CR^{10} \qquad IV$$

wherein $R^5$ through $R^{10}$ each are hydrogen or a $C_1$ - $C_{24}$ hydrocarbon group;
a modified organoaluminum compound (E) having Al-O-Al bonds derived from the reaction of an organoaluminum compound with water, said organoaluminum compound being of the formula

$$R^{17}{}_cAlX^7{}_{3-c}$$

wherein $R^{17}$ is a hydrocarbon groups such as an alkyl, alkenyl, aryl and aralkyl group of 1 to 18 carbon atoms, $X^7$ is a halogen or hydrogen atom, and c is an integer of $1 \leq c \leq 3$; and
an inorganic and/or particulate polymer carrier (F), said inorganic carrier being formed from a porous inorganic compound of the group consisting of a carbonaceous material, metal, metal oxide, metal chloride, metal carbonate and mixtures thereof, and having a maximum length of 5 - 200 µm, a surface area of 50 - 1,000 $m^2/g$ and a pore volume of 0.05 - 3 $cm^3/g$, and said particulate polymer carrier being formed from a thermoplastic or thermosetting resin having an average particle size of 5 - 2,000 µm.

European Patent Office

# EUROPEAN SEARCH REPORT

Application Number
EP 96 85 0103

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 546 690 (NIPPON OIL)<br>* page 14; example D * | 1-10 | C08F10/00<br>C08F4/651 |
| X | * page 7, line 27 - line 38 * | 3 | |
| X | * page 7, line 51 - line 56 * | 2,3 | |
| X | * page 9, line 5 - line 10 * | 5,6,8 | |
| X | * page 9, line 11 - line 31 * | 7 | |
| X | * page 19, line 4 - line 6 *<br>* page 23; example 22; table 3 * | 9,10 | |
| X | EP-A-0 463 809 (MITSUBISHI)<br>* column 10, line 21 - column 11, line 38; example 1 * | 1 | |
| X | EP-A-0 569 249 (NIPPON OIL)<br>* page 12; example 1 *<br>* page 13; example 4 *<br>* page 8, line 21 - line 28 * | 1-10 | |
| X | * page 9, line 35 - line 41 * | 5,8 | |
| X | * page 9, line 42 - page 10, line 10 * | 7 | |
| | | | TECHNICAL FIELDS SEARCHED (Int.Cl.6) |
| | | | C08F |

The present search report has been drawn up for all claims

| Place of search | Date of completion of the search | Examiner |
|---|---|---|
| THE HAGUE | 9 September 1996 | Fischer, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)